(19) Europäisches Patentamt
European Patent Office
Office européen des brevets

(11) **EP 4 675 516 A1**

(12) **EUROPEAN PATENT APPLICATION**
published in accordance with Art. 153(4) EPC

(43) Date of publication:
**07.01.2026 Bulletin 2026/02**

(21) Application number: **23925356.0**

(22) Date of filing: **27.09.2023**

(51) International Patent Classification (IPC):
***G06N 20/00*** *(2019.01)*

(52) Cooperative Patent Classification (CPC):
**G06N 20/00**

(86) International application number:
**PCT/JP2023/035284**

(87) International publication number:
**WO 2024/180802 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.02.2023 JP 2023028179**

(71) Applicant: **Sony Group Corporation
Tokyo 108-0075 (JP)**

(72) Inventor: **SUZUKI, Kenji
Tokyo 108-0075 (JP)**

(74) Representative: **2SPL Patentanwälte PartG mbB
Landaubogen 3
81373 München (DE)**

(54) **INFORMATION PROCESSING DEVICE, INFORMATION PROCESSING METHOD, COMPUTER PROGRAM, AND IMAGE SENSOR**

(57)     To visualize and remove bias.

An information processing device includes: an acquisition unit that acquires information regarding bias caused by a sensitive attribute included in data or a model by using explainable artificial intelligence (XAI); and a processing unit that executes processing of mitigating the bias of the data or the model on a basis of the acquired information. The acquisition unit includes a prediction model that predicts the sensitive attribute from a data item of a non-sensitive attribute in input data including a plurality of data items, and a contribution degree calculation unit that calculates the degree of contribution of each data item of the non-sensitive attribute on the basis of a determination basis of the prediction model obtained by using XAI.

FIG. 1

**Description**

TECHNICAL FIELD

The technology (hereinafter, "the present disclosure") disclosed in the present specification relates to an information processing device that executes processing related to training of artificial intelligence (AI), an information processing method, a computer program, and an image sensor.

BACKGROUND ART

The evolution of artificial intelligence (AI) is remarkable, and recognition, identification, prediction, and the like beyond human beings have been realized, and utilization in each field has progressed. On the other hand, an ethical problem of AI has occurred, and it is a social problem that unfair determination is made by machine learning depending on race, sex, and the like. Causes of such unfairness in AI include bias caused by a dataset used for training and bias in training. Therefore, the challenge lies in mitigating the bias at the stage of collecting the dataset and making fair determination by learning the collected dataset. However, it is practically difficult to collect a complete dataset ensuring fairness with respect to race and sex. This is because random collection of data causes some biased data distribution, which affects machine learning as data bias.

For example, there has been proposed a system for managing a model trained by machine learning in which fairness is ensured by rewriting a content of a prediction request, and a dataset is augmented and retrained by fixing a value of a rewritten item and changing other values (see Patent Document 1).

In addition, there is a method called FairGAN (see Non-Patent Document 1) that generates data in which distribution of training data does not change depending on the presence or absence of a sensitive attribute by using a generative adversarial network (GAN). The model of FairGAN includes, in addition to a generator G for newly generating fair training data from noise, two classifiers, a classifier D1 for identifying whether given data is original data or data generated by the generator G, and a classifier D2 for identifying whether or not generated data has a sensitive attribute. The generator G is trained to minimize the performance of each of the classifiers D1 and D2. Data generated by the trained generator G has a structure similar to original training data and independent of the sensitive attribute.

CITATION LIST

PATENT DOCUMENT

Patent Document 1: JP 2021-12593 A

NON-PATENT DOCUMENT

Non-Patent Document 1: Xu et al., "FairGAN: Fairness-aware Generative Adversarial Networks," IEEE BigData 2018.
Non-Patent Document 2: Lundberg, Scott M., and Su-In Lee. "A unified approach to interpreting model predictions." Advances in neural information processing systems.12017.
Non-Patent Document 3: "Why Should I Trust You?": Explaining the Predictions of Any Classifier <https://arxiv.org/abs/1602.04938>
Non-Patent Document 4: Residuals and Influence in Regression, Cook, R.D. and Weisberg, S <https://conservancy.umn.edu/handle/11299/37076>

SUMMARY OF THE INVENTION

PROBLEMS TO BE SOLVED BY THE INVENTION

It is desirable to provide an information processing device that executes processing for ensuring fairness of artificial intelligence (AI), an information processing method, a computer program, and an image sensor.

SOLUTIONS TO PROBLEMS

The present disclosure has been made in view of the above problems, and a first aspect of the present disclosure is an information processing device including:

> an acquisition unit that acquires information regarding bias caused by a sensitive attribute included in data or a model by using explainable artificial intelligence (XAI); and
> a processing unit that executes processing of mitigating the bias of the data or the model on the basis of the acquired information.

In the information processing device according to the first aspect, the acquisition unit includes a pre-processing unit that removes a data item related to the sensitive attribute from input data including a plurality of data items, a prediction unit that predicts the sensitive attribute from a data item of a non-sensitive attribute in the input data, and a contribution degree calculation unit that calculates a degree of contribution of each data item of the non-sensitive attribute in the input data to a prediction result of the prediction unit. The prediction unit predicts the sensitive attribute from the data item of the non-sensitive attribute in the input data by using a prediction model having the sensitive attribute as an objective variable. Then, the contribution degree calculation unit calculates the degree of contribution of each data item of the non-sensitive attribute on the basis of a determination basis of the prediction model obtained by using the XAI. Therefore, the processing unit can modify a correct answer label corresponding to input data according to a contribution degree calculation result and generate a dataset in which the bias caused by the sensitive attribute is mitigated. The processing unit can modify the correct answer label for each sensitive attribute value of the input data including the data item having a higher degree of contribution in the non-sensitive attribute, and generate the dataset in which the bias caused by the sensitive attribute is mitigated.

Alternatively, in the information processing device according to the first aspect, the acquisition unit further includes an influence function calculation unit that calculates an influence function of the sensitive attribute for a result of determining input data by a trained model. For example, the input data is an image captured by an image sensor, and the trained model is a model trained to detect a person from the image. In this case, the influence function calculation unit calculates an influence function of the sensitive attribute in a case where a person is detected from the image by the trained model. Then, the processing unit can further perform model retraining by adding an image of the sensitive attribute having a low influence function value, thereby mitigating model bias.

Further, a second aspect of the present disclosure is an information processing method including:

> acquiring information regarding bias caused by a sensitive attribute included in data or a model by using explainable artificial intelligence (XAI); and
> executing processing of mitigating the bias of the data or the model on the basis of the acquired information.

Further, a third aspect of the present disclosure is a computer program described in a computer-readable format to cause a computer to functions as:

> an acquisition unit that acquires information regarding bias caused by a sensitive attribute included in data or a model by using explainable artificial intelligence (XAI); and
> a processing unit that executes processing of mitigating the bias of the data or the model on the basis of the acquired information.

The computer program according to the third aspect of the present disclosure is obtained by defining a computer program described in a computer-readable format in such a way as to implement predetermined processing on a computer. The computer program can be provided for a purpose computer capable of executing various program codes by a storage medium provided in a computer-readable form, or a communication medium, for example, a storage medium such as an optical disk, a magnetic disk, or a semiconductor memory, or a communication medium such as a network. Then, the computer program according to the third aspect of the present disclosure installed in the computer using any one of the media exerts a cooperative action on the computer, so that similar operational effects to those of the device according to the first aspect of the present disclosure can be obtained.

Further, a fourth aspect of the present disclosure is

> an image sensor including
> a multilayer semiconductor chip,
> in which a sensor unit that includes a pixel array and captures an image is mounted on a first layer, and a memory unit that stores the captured image of the sensor unit and a logic unit that controls driving of the sensor unit and processes the captured image of the sensor unit are mounted on a second layer and subsequent layers, and
> the logic unit includes an inference unit that performs inference on the captured image by using a trained model and a determination basis calculation unit that calculates a determination basis for a result of the inference by the trained model.

The inference unit detects a person from the captured image by using the trained model. Furthermore, the determination basis calculation unit calculates an influence function of a sensitive attribute in a case where a person is detected from the image by the trained model.

EFFECTS OF THE INVENTION

According to the present disclosure, it is possible to provide an information processing device, an information processing method, a computer program, and an image sensor that visualize a bias included in AI training data or AI by using XAI and remove the bias.

Note that the effects described in the present specification are merely examples, and the effects brought by the present disclosure are not limited thereto. Furthermore, the present disclosure may further provide additional effects in addition to the effects described above.

Still other objects, features, and advantages of the present disclosure will become apparent from a more detailed description based on embodiments as described later and the accompanying drawings.

BRIEF DESCRIPTION OF DRAWINGS

Fig. 1 is a diagram illustrating a functional configuration example of a training system 100.
Fig. 2 is a flowchart illustrating a schematic processing procedure executed in the training system 100.
Fig. 3 is a diagram illustrating a functional configuration of a data bias mitigation unit 121.
Fig. 4 is a diagram illustrating an example of demographic parity.
Fig. 5 is a diagram illustrating an example of equalized odds.
Fig. 6 is a diagram illustrating an example of equal opportunity.
Fig. 7 is a diagram illustrating transition of distribution on a dataset [Y,X,S] by bias mitigation.
Fig. 8 is a diagram illustrating a configuration example of an information processing device 2000.
Fig. 9 is a diagram illustrating a functional configuration of an imaging device 800.
Fig. 10 is a diagram illustrating a hardware implementation example of an image sensor 1000.
Fig. 11 is a diagram illustrating a hardware implementation example of an image sensor 1100.
Fig. 12 is a diagram illustrating an example in which the image sensor 1000 (or 1100) is formed as a semiconductor chip 1200 having a two-layer structure in which two layers are stacked.
Fig. 13 is a diagram illustrating an example in which the image sensor 1000 (or 1100) is formed as a semiconductor chip 1300 having a three-layer structure in which three layers are stacked.
Fig. 14 is a diagram illustrating an operation example of the training system 100.
Fig. 15 is a diagram illustrating an example of a communication sequence performed by a client server system illustrated in Fig. 14.
Fig. 16 is a diagram illustrating an example of an operation in a digital camera on which an image sensor including a multilayer semiconductor chip including a logic unit is mounted.
Fig. 17 is a diagram illustrating an example of a Shapley value calculated in a case where a sensitive attribute S is predicted from a non-sensitive attribute X.

MODE FOR CARRYING OUT THE INVENTION

Hereinafter, embodiments of the present disclosure will be described with reference to the drawings in the following order.

A. Overview
B. Configuration and Operation of Training System

    B-1. System Configuration
    B-2. System Operation

C. Mechanism of Bias Mitigation

C-1. Mechanism of Bias Mitigation

C-2. Fairness

C-3. Explainable Data Bias Mitigation Method

C-4. Configuration of Information Processing Device

D. Second Embodiment

D-1. Configuration of Imaging Device

D-2. Configuration of Image Sensor

D-3. System Configuration and Operation

A. Overview

Although the evolution of artificial intelligence (AI) is remarkable, an ethical problem of AI has occurred. Training using a dataset with biased distribution causes bias of AI, and there is a possibility that an unfair result is output. Conversely, AI trained using an unbiased and fair dataset can output a fair result independent of a sensitive attribute while maintaining prediction or inference performance. For this reason, the challenge lies in collecting an unbiased and fair dataset.

Various methods in machine learning of AI have been proposed to achieve fairness that does not depend on sensitive attributes. However, since the method for AI itself is a black box, it is difficult for a human to intuitively understand what kind of internal processing has been used to determine the fairness. In addition, there is also a problem that there is a certain limit to collection of diverse data.

Therefore, as the present disclosure, a bias mitigation method using explainable AI (XAI) is proposed. According to the present disclosure, information regarding bias caused by a sensitive attribute included in input data can be acquired by using XAI, and processing of mitigating the bias can be further executed on the basis of the acquired information.

In a first embodiment (described later) of the present disclosure, data of a sensitive attribute in input data is predicted from data of a non-sensitive attribute in the input data by using a prediction model, a determination basis of the prediction model is calculated by using XAI, and a correct answer label corresponding to the input data is modified on the basis of a result of the calculation by XAI, thereby mitigating bias caused by the sensitive attribute, which is latent in a dataset for training.

Furthermore, in a second embodiment (described later) of the present disclosure, an influence function for a result of inference by a trained model is calculated for each data item of a sensitive attribute in input data by using XAI. For example, in a case of being mounted on an image sensor with an AI function and performing person detection from an image captured by the image sensor by AI, an influence function of each data item of a sensitive attribute for the detection result is calculated. Then, in a case where a data item of a sensitive attribute having a low influence score is found in the person detection, bias of AI caused by the sensitive attribute is mitigated by adding an image corresponding to the data item and retraining the AI.

Therefore, according to the present disclosure, it is possible to eliminate bias latent in a dataset in which sensitive attributes such as race, age, and sex are unknown, and it is possible to explain how bias mitigation is implemented in a way that is understandable to humans.

B. Configuration and Operation of Training System

In the first embodiment of the present disclosure, a sensitive attribute is predicted from input data without sensitive attribute data by using a prediction model, a determination basis of the prediction model is calculated by using XAI, and a correct answer label corresponding to the input data is modified on the basis of a result of the calculation by XAI, thereby mitigating data bias caused by the sensitive attribute, which is latent in a dataset for training. Furthermore, in the second embodiment of the present disclosure, an influence function for a result of inference by a trained model is calculated for each data item of a sensitive attribute in input data by using XAI, and retraining based on each influence score is performed to mitigate model bias. In this section B, a configuration and operation of a training system applied to each embodiment of the present disclosure will be described.

B-1. System Configuration

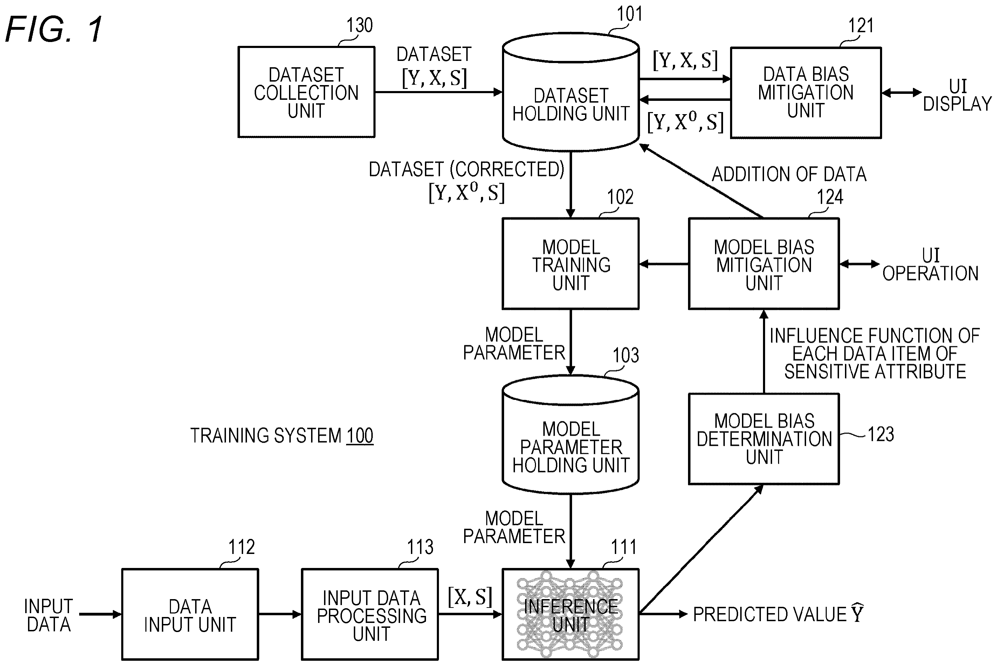

Fig. 1 illustrates a functional configuration example of a training system 100 to which the first embodiment of the present disclosure is mainly applied. Although the illustrated training system 100 is used by being installed on, for example, an edge device, some or all of the functions of the training system 100 may be constructed on a cloud or an arithmetic device capable of large-scale computation. Hereinafter, the training system 100 trains a model (a neural network model or the like) for performing image recognition such as face detection, face identification, person/object detection, or posture estimation, for example, and may also train a model for performing inference such as adoption of personnel, a re-offending rate, and determination of a loan on the basis of an image. However, the present disclosure is not limited thereto, and the training system 100 may train models used for inference in various fields.

The illustrated training system 100 includes a dataset holding unit 101, a model training unit 102, a model parameter holding unit 103, an inference unit 111, a data input unit 112, and an input data processing unit 113. Among them, the dataset holding unit 101, the model training unit 102, and the model parameter holding unit 103 operate in a model training phase, and the inference unit 111, the data input unit 112, and the input data processing unit 113 operate in an inference phase using a trained model. Although the training system 100 is used by being installed on, for example, an edge device, some or all of the functions of the training system 100 may be constructed on a cloud or an arithmetic device capable of large-scale computation. For example, the model training unit 102 that handles a huge amount of data and needs high calculation ability may be arranged in a server on a cloud, and the inference unit 111 that uses the trained model may be arranged in a digital camera, a multifunctional information terminal such as a smartphone or a tablet, or an edge device such as a personal computer.

Furthermore, in the present embodiment, the training system 100 further includes a dataset collection unit 130 that provides a dataset used for model training, and a data bias mitigation unit 121 that mitigates bias latent in the dataset used for model training in the model training unit 102.

Furthermore, the training system 100 may further include a model bias determination unit 123 that determines bias in a case where the inference unit 111 performs inference by using the trained model, and a model bias mitigation unit 124 that executes processing for mitigating bias of the trained model on the basis of a result of determining the bias of the model.

The dataset collection unit 130 collects a dataset used by the model training unit 102 for model training. The dataset collection unit 130 collects a dataset via a wide area network such as the Internet, for example, and accumulates the dataset in the dataset holding unit 101. The dataset collection unit 130 may collect a dataset from a service that provides a dataset for training.

The dataset basically includes a combination of input data input to a model to be trained and an observation value for the input data. The input data includes sensitive attribute data S and attribute data X that is not a sensitive attribute (that is, non-sensitive attribute data X). The sensitive attribute data S basically includes sex, race, and age. However, depending on the application, any of the sex, the race, and the age may be omitted, or a part of the non-sensitive attribute data may be treated as the sensitive attribute data. In addition, the observation value corresponds to a correct answer label Y in a case of training the model. Hereinafter, the dataset is described as [Y,X,S].

Furthermore, in a case where the model training unit 102 trains a model for image classification such as person detection or object detection, the dataset collection unit 130 collects a dataset including a combination of an image captured by each of a large number of digital cameras and a correct answer label (what is the subject of the captured image) via a wide area network such as the Internet and accumulates the dataset in the dataset holding unit 101.

The dataset holding unit 101 accumulates a dataset to be used by the model training unit 102 for model training. The dataset holding unit 101 accumulates a dataset provided from the dataset collection unit 130, and may also accumulate a dataset obtained from another source. In the present embodiment, a dataset $[Y^0,X,S]$ including a correct answer label $Y^0$ in which bias caused by the sensitive attribute data S latent in the non-sensitive attribute data X is mitigated (that is, corrected) by the data bias mitigation unit 121 (described later) is also accumulated in the dataset holding unit 101. In a case where the model training unit 102 performs deep learning, a huge amount of necessary datasets are accumulated in the dataset holding unit 101. The dataset holding unit 101 is implemented by a large-capacity storage device, and may be, for example, a data server.

The model training unit 102 sequentially reads datasets from the dataset holding unit 101, performs model training, and updates a model parameter. A model to be trained is, for example, a neural network including a combination of neurons, and may also be a model using a type such as support vector regression or Gaussian process regression. The neural network model has a multilayer structure including an input layer that receives data (explanatory variable) such as an image, an output layer that outputs a label (objective variable) that is an inference result for the input data, and one or a plurality of intermediate layers (or hidden layers) between the input layer and the output layer. Each layer includes a plurality of nodes corresponding to neurons. Connection between the nodes across the layers has a weight, and a value of the data input to the input layer is transformed as the data passes from layer to layer.

For example, the model training unit 102 calculates a loss function L defined on the basis of an error between an output $Y^\wedge$ from a model for input data [X,S] and a known correct answer label Y corresponding to the input data, and performs model training while updating the model parameter by back propagation in such a way that the loss function L is minimized. Then, the model training unit 102 stores a model parameter obtained as a training result, in the model parameter holding unit 103. The model parameter is a variable element that defines the model, and is, for example, a connection weight coefficient, or the like to be given to the neurons of the neural network model. Note that an estimated value of Y output from the model is represented by adding an accent symbol "^" to the letter "Y" in formulas. In the present specification, the estimated value of Y is expressed as "Y^" by connecting the accent symbol "^" immediately after the character "Y".

Note that, since model training processing needs a huge amount of calculation, the model training unit 102 may perform training by using an information processing device equipped with an arithmetic circuit such as a multi-core central unit (CPU), a graphics processing unit (GPU), or a general-purpose computing on graphics processing unit (GPGPU), or may perform distributed training using a plurality of calculation nodes.

The inference unit 111, the data input unit 112, and the input data processing unit 113 implement the inference phase by using the trained model. The functional modules 111 to 113 are mounted, for example, on an edge device that uses the trained model. The data input unit 112 inputs data to be inferred from the outside. The data input unit 112 may input data via a console or may input sensor information acquired by a sensor included in the edge device. The input data processing unit 113 performs reshaping processing in such a way that the data to be input from the data input unit 112 has a data format that can be input to the trained model, and inputs the data to the inference unit 111. The input data to the inference unit 111 is [X,S] including the non-sensitive attribute data X and the sensitive attribute data S. The inference unit 111 outputs a predicted value Y^ predicted by the trained model from the input data [X,S]. The trained model is a model in which the model parameter read from the model parameter holding unit 103 is set.

The data bias mitigation unit 121 sequentially extracts the datasets [Y,X,S] accumulated in the dataset holding unit 101, corrects the correct answer label Y corresponding to the input data [X,S] in such a way as to mitigate bias caused by the sensitive attribute data S latent in the non-sensitive attribute data X, and writes back a dataset [Y°,X,S] with a corrected correct answer label Y° to the dataset holding unit 101. In the first embodiment of the present disclosure, the data bias mitigation unit 121 predicts a sensitive attribute S^ from the input data X without the sensitive attribute data by using the prediction model, and calculates, by using XAI, a basis for determining the sensitive attribute S^ by the prediction model. Specifically, for each data item of the non-sensitive attribute in the input data, a Shapley value according to cooperative game theory is calculated as the degree of contribution to prediction. Then, bias caused by the sensitive attribute latent in the dataset [Y,X,S] is mitigated by modifying the correct answer label for each sensitive attribute value of the input data including a data item having a higher Shapley value in the non-sensitive attribute. Details of data bias mitigation processing will be described in detail in the following section C.

Note that various settings in the data bias mitigation processing in the data bias mitigation unit 121 may be set by a user operation via a user interface (UI). In addition, the data bias mitigation unit 121 can visualize how to mitigate bias of the input data using the UI to make it possible for humans to understand. For example, the data bias mitigation unit 121 may feed back the Shapley value calculated for each data item of the non-sensitive attribute in the input data or information regarding the data bias mitigating processing based on the Shapley value to the user.

The model bias determination unit 123 analyzes a result of inference performed by the inference unit 111 using the trained model, and determines whether or not fairness of the model is ensured, that is, model bias. In the second embodiment (described later), the influence function of each data item of the sensitive attribute in the input data for a result of inference by the trained model, that is, the inference unit 111 is calculated using XAI. Subsequently, the model bias determination unit 123 detects whether or not there is a data item having a low influence score for the result of inference by the trained model. Then, the model bias determination unit 123 can determine that negative bias is applied to the data item of the sensitive attribute having a low influence score, that is, the fairness of the model is not ensured.

The model bias mitigation unit 124 executes processing for mitigating the model bias on the basis of the model bias determination result. The model bias mitigation unit 124 may perform a model bias mitigation algorithm such as transfer learning, fine tuning, and incremental learning, and the model training unit 102 may mitigate the model bias for the trained model.

In the second embodiment of the present disclosure, the model bias mitigation unit 124 adds input data corresponding to the data item of the sensitive attribute for which the model bias determination unit 123 has determined that the influence score for inference by the trained model is low, and instructs the model training unit 102 to retrain the model by using the added input data. As a result, the model is retrained in such a way that even the influence of the sensitive attribute having a low influence score increases, and the model bias caused by the sensitive attribute can be mitigated.

Note that various settings in the model bias mitigation processing may be set by a user operation via the UI. In addition, the model bias mitigation unit 124 can visualize how to mitigate the model bias by performing presentation using the UI to make it possible for humans to understand.

B-2. System Operation

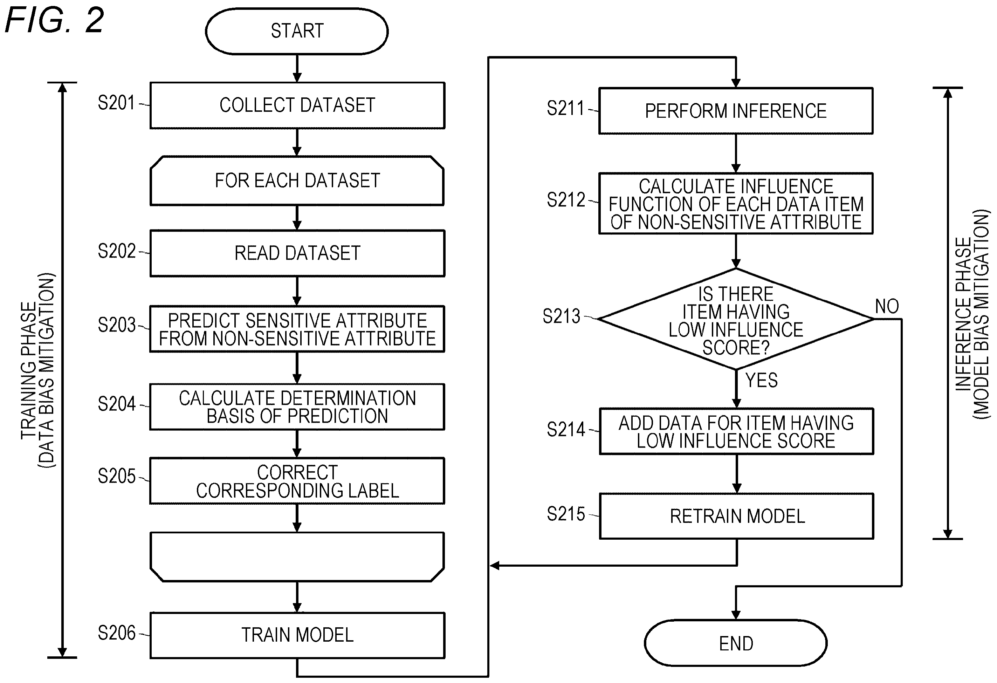

Fig. 2 illustrates a schematic processing procedure executed in the training system 100 in the form of a flowchart. The illustrated processing procedure is classified into the training phase in which model training is performed and the inference phase in which inference is performed using the trained model, and has a main characteristic in that the processing procedure includes processing of mitigating bias of training data, that is, "data bias" in the training phase and processing of mitigating bias in inference by the trained model, that is, "model bias" in the inference phase.

First, the training phase will be described. The dataset collection unit 130 collects a dataset to be used by the model training unit 102 for model training (step S201). The dataset collection unit 130 collects a dataset via a wide area network such as the Internet, for example, and accumulates the dataset in the dataset holding unit 101. However, a source from which the dataset collection unit 130 collects the training data is not particularly limited.

The data bias mitigation unit 121 mitigates bias latent in the dataset used for model training in the model training unit 102 for the datasets accumulated in the dataset holding unit 101. Specifically, the data bias mitigation unit 121 repeats a series of processing of reading the dataset [Y,X,S] from the dataset holding unit 101 (step S202), predicting the sensitive attribute S^ from the non-sensitive attribute data X by using the prediction model (step S203), calculating, by using XAI, the basis for determining the sensitive attribute S^ by the prediction model (step S204), and modifying the correct answer label Y corresponding to the input data X based on the calculation result (step S205) as correction processing for mitigating bias for each dataset accumulated in the dataset holding unit 101. In step S204, the Shapley value is calculated as the degree of contribution to prediction for each data item of the non-sensitive attribute data X in the input data. Then, in step S205, modification is performed on the correct answer label Y for each sensitive attribute value of the input data including the data item having a higher Shapley value in the non-sensitive attribute data X, thereby mitigating bias caused by the sensitive attribute latent in the dataset for training.

Then, the model training unit 102 trains a model to be trained by using the dataset in which the data bias is mitigated, and updates the model parameter (step S206). For example, in a case where a convolutional neural network is to be trained, the model training unit 102 calculates the loss function L defined on the basis of the error between the predicted value Y^ of the model for the input data [X,S] and the correct answer label Y corresponding to the input data [X,S], and performs training by back propagation in such a way that the loss function L is minimized. However, the present disclosure is not limited to a specific learning algorithm. Then, the model training unit 102 stores a model parameter obtained as a training result, in the model parameter holding unit 103.

Next, the inference phase will be described. The data input unit 112 inputs data to be inferred. The input data processing unit 113 executes data processing in such a way that the data to be input from the data input unit 112 has the data format [X,S] that can be input to the trained model, and inputs the data to the inference unit 111. Then, the inference unit 111 outputs the inference result Y^ for the input data [X,S] by using a model in which the model parameter read from the model parameter holding unit 103 is set, that is, the trained model (step S211).

Next, the model bias determination unit 123 analyzes the result of inference performed by the inference unit 111 using the trained model, and determines whether or not fairness of the trained model is ensured, that is, model bias. In the second embodiment (described later), the influence function of each data item of the sensitive attribute for the result of inference by the trained model is calculated using XAI (step S212), and it is detected whether or not there is a data item having a low influence score for the inference result (step S213).

Then, in a case where there is a data item having a low influence score, that is, in a case where the model bias determination unit 123 has determined that there is model bias (Yes in step S213), the model bias mitigation unit 124 executes processing for mitigating the model bias. In the second embodiment of the present disclosure, the model bias mitigation unit 124 adds input data including a sensitive attribute value for which the model bias determination unit 123 has determined that the influence score for inference by the trained model is low (step S214) (step S215), instructs the model training unit 102 to retrain the model by using the added input data, and causes the model training unit 102 to retrain the model (step S215). As a result, the model is retrained in such a way that even the influence of the sensitive attribute value having a low influence score increases, and the model bias caused by the sensitive attribute can be mitigated.

After the model bias mitigation processing in steps S215 to S216 is executed, the processing returns to step S211, and inference using the model after model bias mitigation and model bias determination are repeatedly performed. Then, in a case where it is determined that there is no model bias (No in step S213), it is determined that a fair model without bias is obtained, and the processing ends.

C. First Embodiment

In this section C, a technology of calculating bias latent in a dataset used for model training by using XAI to mitigate the data bias will be described as the first embodiment of the present disclosure. By applying XAI, it is possible to describe how the data bias mitigation is implemented in a way that is understandable to humans.

C-1. Mechanism of Bias Mitigation

First, the data bias mitigation processing executed by the data bias mitigation unit 121 will be described in detail.

The data bias mitigation unit 121 predicts the sensitive attribute in the input data from the non-sensitive attribute data in the input data by using the trained prediction model. Subsequently, the data bias mitigation unit 121 calculates, by using XAI, the basis for determining the sensitive attribute data from the non-sensitive attribute data by the prediction model, and modifies the correct answer label corresponding to the input data on the basis of a result of the calculation by XAI, thereby mitigating bias of the input data caused by the sensitive attribute latent in the dataset for training.

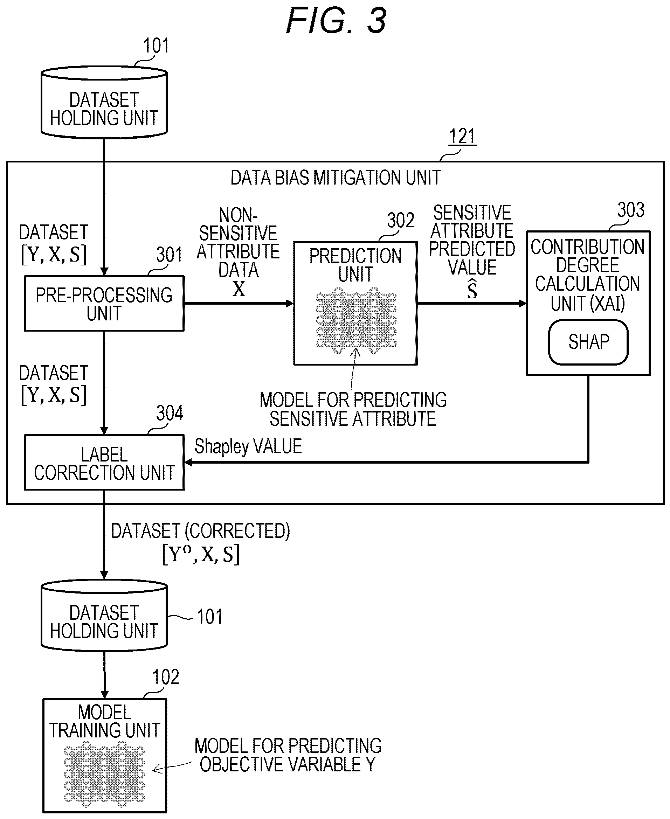

Fig. 3 schematically illustrates a functional configuration of the data bias mitigation unit 121. The illustrated data bias mitigation unit 121 includes a pre-processing unit 301, a prediction unit 302, a contribution degree calculation unit 303, and a label modifying unit 304.

The pre-processing unit 301 executes pre-processing for executing the data bias mitigation processing on the dataset [Y,X,S] extracted from the dataset holding unit 101. Specifically, the pre-processing unit 301 generates the input data X including the non-sensitive attribute data by removing the sensitive attribute data S from the input data [X,S] of the dataset.

The prediction unit 302 predicts the original sensitive attribute data S^ from the non-sensitive attribute data X by using the trained prediction model for predicting the sensitive attribute.

The contribution degree calculation unit 303 calculates the degree of contribution of each data item included in the non-sensitive attribute data X of the input data to the prediction result S^ of the prediction model.

In the first embodiment of the present disclosure, the contribution degree calculation unit 303 uses Shapley additive explanations (SHAP) (see Non-Patent Document 2), which is one of XAI technologies for model visualization. SHAP is an algorithm that calculates the degree of contribution of each feature of target data (each feature value included in the target data) to a prediction result of AI. By using SHAP, in a case where the prediction model predicts the original sensitive attribute data S from the non-sensitive attribute data X, the degree of contribution of each data item included in the non-sensitive attribute data X is calculated as the Shapley value according to the cooperative game theory.

The label modifying unit 304 modifies the correct answer label Y corresponding to the input data [X,S] according to each degree of contribution of each data item included in the non-sensitive attribute data X, thereby mitigating bias caused by the sensitive attribute latent in the dataset [Y,X,S]. Then, the dataset [Y°,X,S] including the corrected correct answer label Y° is written back to the dataset holding unit 101. For example, in a case where the sensitive attribute is "sex", the label modifying unit 304 changes a correct answer label for any one of male and female in which values of some data items having higher Shapley values (or a data item having the highest Shapley value) in the non-sensitive attribute are equal to or more than a predetermined threshold, and generates a dataset in which bias caused by sex is mitigated.

The model training unit 102 is expected to perform model training without bias caused by the sensitive attribute by using the dataset [$Y^0$,X,S] in which the correct answer label Y is corrected in such a way as to mitigate the bias caused by the sensitive attribute latent in the non-sensitive attribute data by the data bias mitigation unit 121 as described above.

In addition, by presenting the Shapley value calculated by the contribution degree calculation unit 303 for each data item of the non-sensitive attribute data X, the values of each data item of the non-sensitive attribute data X before and after the correction by the label modifying unit 304, and the like by using the GUI, it is possible to visualize how to mitigate bias of the input data, thereby making it possible for humans to understand.

Note that XAI applied to the contribution degree calculation unit 303 is not limited to SHAP. For example, other methods for calculating the degree of importance of each variable, such as local interpretable model-agnostic explanations (LIME), may be applied. LIME is an algorithm that estimates, if an output result of the neural network is inverted or greatly changed when a specific input data item (feature) is changed, the item as having a "high degree of importance in determination" (see Non-Patent Document 3).

C-2. Fairness

In this section C-2, a definition of fairness in the AI technology will be described. That there is no bias, that is, that predictive distribution of AI does not change due to the sensitive attribute means that it is fair. Further, the sensitive attribute data S basically includes sex, race, and age. However, depending on the application, any of the sex, the race, and the age may be omitted, or a part of the non-sensitive attribute data may be treated as the sensitive attribute data.

For example, in a case where distribution of prediction scores changes depending on a sensitive attribute such as race or sex in prediction of a company recruitment test result, a re-offending rate of an ex-convict, or a loan examination result, it is difficult for the model to exclude social bias, which is unfair. In the field, for example, definitions of fairness such as demographic parity, equalized odds, and equal opportunity are known.

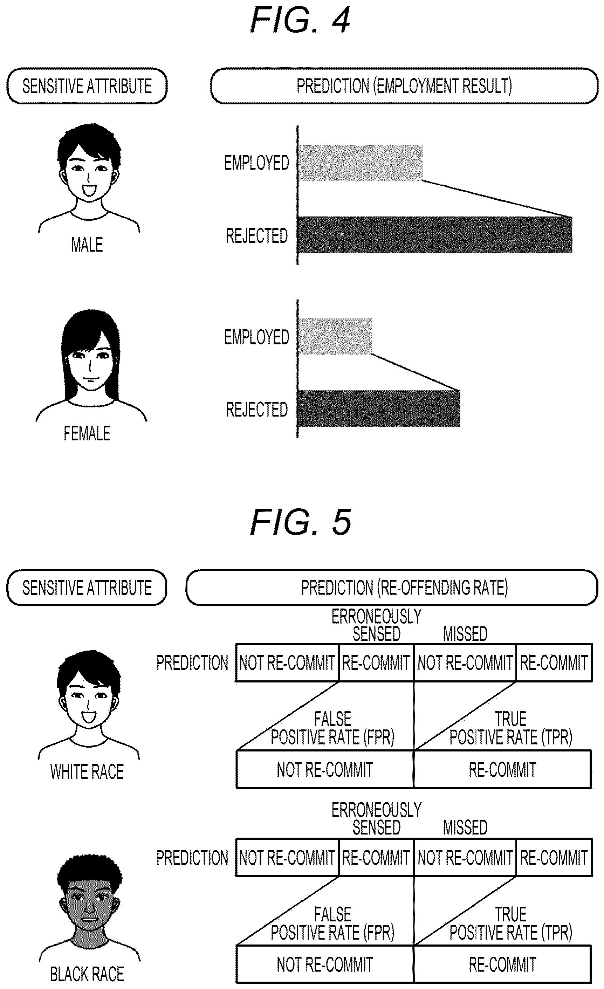

Demographic parity is a definition of fairness that the same predicted distribution should be used regardless of the sensitive attribute. For example, in human resources recruitment by a company, as illustrated in Fig. 4, the definition of fairness is that a ratio between employment and rejection is the same regardless of the sensitive attribute "sex" (alternatively, a difference between the ratios is equal to or less than a predetermined threshold), and a predicted label ratio is a criterion of fairness. Assuming that the predicted value obtained by the trained model is Y^ and the sensitive attribute is S, demographic parity is expressed by the following Formula (1).

[Math. 1]

$$P\left(\hat{Y}\middle|S=0\right) = P\left(\hat{Y}\middle|S=1\right) \qquad \cdots (1)$$

In addition, equalized odds is a definition of fairness that a ratio between a true positive rate (TPR) and a false positive rate (FPR) is the same regardless of the sensitive attribute (alternatively, a difference between the ratios is equal to or less than a predetermined threshold). For example, in prediction as to whether or not an ex-convict will re-commit a crime, as illustrated in Fig. 5, a ratio between the false positive rate (FPR) at which an ex-convict who has not re-committed a crime is erroneously detected as having re-committed a crime and the true positive rate (TPR) at which an ex-convict who has been predicted to re-commit a crime has actually re-committed a crime is the same regardless of the sensitive attribute "race" (alternatively, a difference between the ratios is equal to or less than a predetermined threshold). Assuming that a target (whether or not a certain event has actually occurred) is Y, the predicted value obtained by the trained model is Y^, the sensitive attribute is S, and y belongs to {0,1}, equalized odds is expressed by the following Formula (2).
[Math. 2]

$$P\big(\hat{Y} = 1 \big| S = 0, Y = y\big) = P\big(\hat{Y} = 1 \big| S = 1, Y = y\big) \qquad \cdots (2)$$

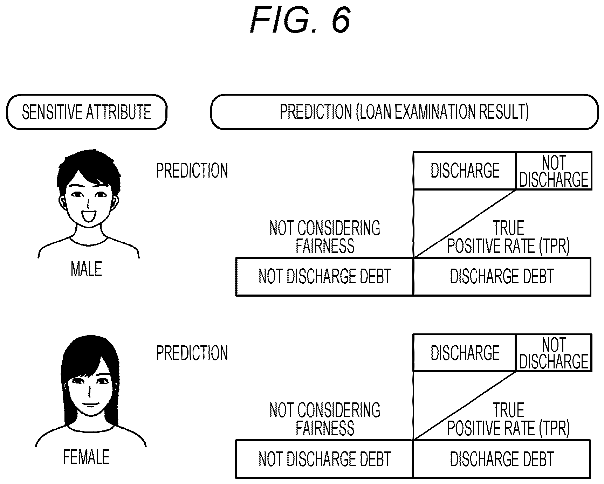

Furthermore, equal opportunity is a definition of fairness that a proportion of the true positive rate (TPR) is the same regardless of the sensitive attribute (alternatively, a difference between the ratios is equal to or less than a predetermined threshold), and a proportion of the FPR is not taken into consideration unlike equalized odds. For example, in prediction as to whether or not a debtor of a loan discharges a debt, as illustrated in Fig. 6, the same proportion of true positive rate (TPR) of a case where it is predicted that the debt is discharged and the debt has actually been discharged regardless of the sensitive attribute "sex" (alternatively, a difference between the ratios is equal to or less than a predetermined threshold) is the criterion of fairness. Unlike equalized odds described above, a proportion of the false positive rate (FPR) of a case where it is predicted that the debt is discharged and the debt has not actually been discharged is not considered. Assuming that a target (whether or not a certain event has actually occurred) is Y, the predicted value obtained by the trained model is Y^, the sensitive attribute is S, and y belongs to {0,1}, equal opportunity is expressed by the following Formula (3).
[Math. 3]

$$P\big(\hat{Y} = 1 \big| S = 0, Y = 1\big) = P\big(\hat{Y} = 1 \big| S = 1, Y = 1\big) \qquad \cdots (3)$$

In addition to the above, there are definitions of fairness such as Fairness Through Awareness that "similar individuals should obtain similar predicted values" and Fairness Through Unawareness that "fairness should be achieved even if a sensitive attribute is not explicitly used".

In any definition of fairness, according to the first embodiment of the present disclosure, it is expected to perform model training without bias caused by a sensitive attribute, in which each of the above Formulas (1) to (3) is satisfied in each application by using the dataset [$Y^0$,X,S] in which the correct answer label Y is corrected in such a way as to mitigate bias caused by a sensitive attribute latent in the non-sensitive attribute data.

In addition, according to the first embodiment of the present disclosure, since the non-sensitive attribute data X is corrected using the XAI technology, it is possible to visualize how to mitigate bias of input data by presenting a result of calculation by XAI to make it possible for humans to understand.

C-3. Explainable Data Bias Mitigation Method

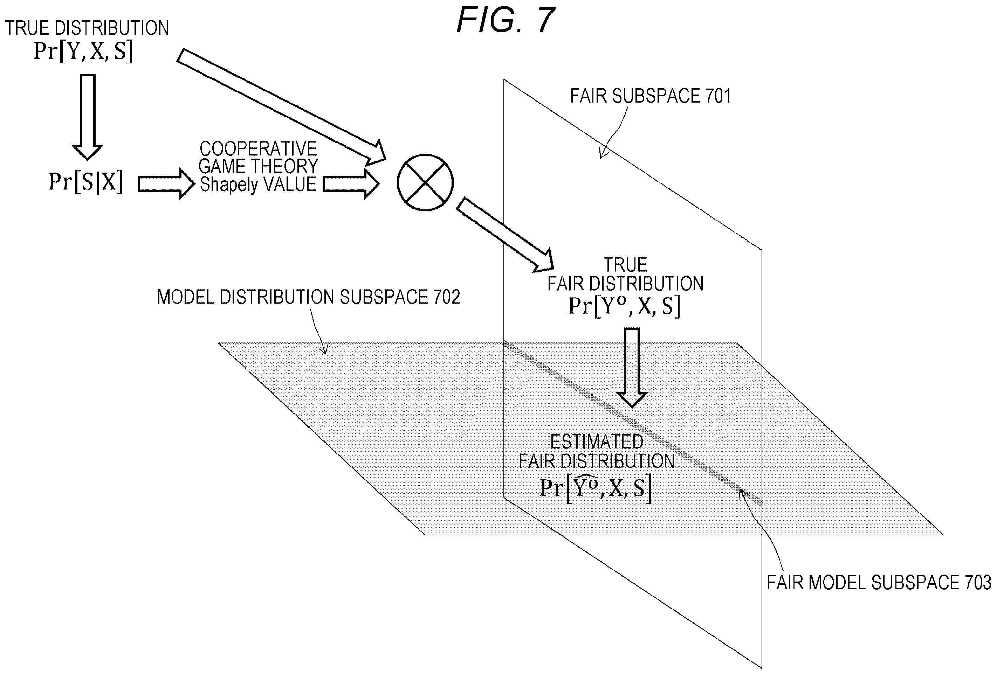

Fig. 7 illustrates transition of a distribution on the dataset [Y,X,S] by bias mitigation (by the data bias mitigation unit 121) in the first embodiment of the present disclosure. In Fig. 7, a vertical plane represents a fair subspace 701 and a horizontal plane represents a model distribution subspace 702. A light beam at which the planes of the fair subspace 701 and the model distribution subspace 702 intersect each other becomes a model subspace 703 satisfying the constraint of fairness. The random variable S is a sensitive attribute such as sex or race, the random variable X is a non-sensitive attribute, the random variable Y is a correct answer label, the random variable Y° is a correct answer label subjected to data bias mitigation, and the random variable Y°^ is a predicted value of the correct answer label Y° subjected to data bias mitigation. The sensitive attribute S is a feature vector having each data item included in the sensitive attribute as an element, and the non-sensitive attribute X is a feature vector having all data items other than the sensitive attribute S in input data (explanatory variable) as elements.

Pr[Y,X,S] is true distribution of a dataset including the original input data including the non-sensitive attribute data X and the sensitive attribute data, and the observation value Y. First, a prediction model (the prediction model used by the prediction unit 302) in which the sensitive attribute S is set as the objective variable is created from the non-sensitive attribute X on the basis of the data of the true distribution Pr[Y,X,S].

In the data bias mitigation unit 121, a relationship between the data items of the respective attributes is obtained as the prediction unit 320 predicts the sensitive attribute S from the non-sensitive attribute X by using the prediction model (Pr[S|X]). Then, the contribution degree calculation unit 303 obtains the Shapley value by using SHAP (see Non-Patent Document 2) which is XAI in such a way that a human can understand explanation of the determination basis of the prediction model. The Shapley value is a numerical value indicating how much each element influences prediction by the cooperative game theory. By calculating the Shapley value of the prediction model, a human can understand the degree of contribution of each data item included in the non-sensitive attribute X to the sensitive attribute. For example, in a case where "sex" as the sensitive attribute is set as the objective variable of the prediction model, the degree of contribution of each of data items $x_1$, $x_2$, and the like of the non-sensitive attribute X as the explanatory variable is indicated by the Shapley value, so that what is the most contributing explanatory variable can be explicitly indicated.

It can be considered that the explanatory variable contributing to the prediction with the sensitive attribute as the objective variable has some influence as the data bias. Therefore, the label modifying unit 304 can mitigate bias caused by the sensitive attribute by modifying the correct answer label corresponding to a data item having a higher Shapley value among the data items $x_1$, $x_2$, and the like included in the non-sensitive attribute data X.

Referring again to Fig. 7, the fair subspace 701 including true and fair data distribution $Pr[Y^0,X,S]$ including the correct answer label Y° modified by the label modifying unit 304 is obtained. A subspace where the model subspace 702 and the fair subspace 703 intersect each other becomes a fair model subspace 703 including fair data distribution Pr $[Y^{0^{\wedge}},X,S]$ estimated by a model trained using a fair dataset.

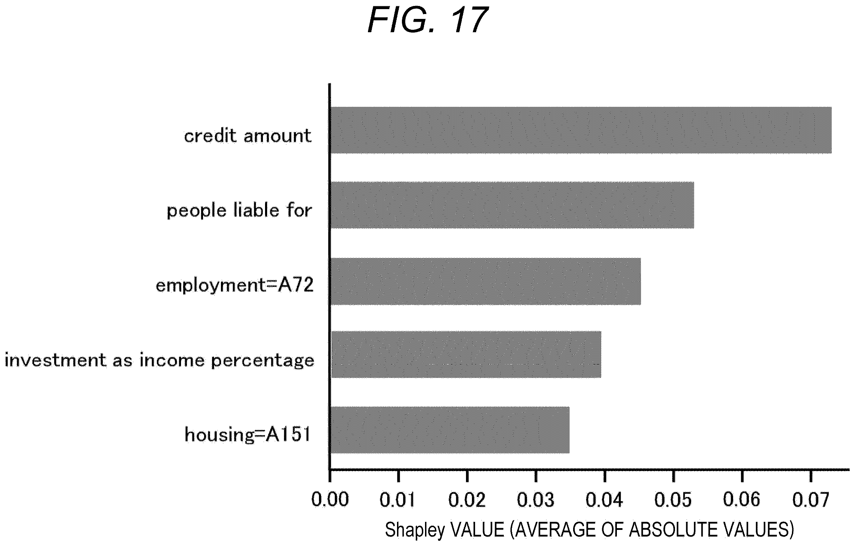

Here, an example of mitigating data bias of the dataset [Y,X,S] for learning a loan examination result by using the above method will be described. In this case, the correct answer label has two values of 1 (loan permitted) and 0 (no loan permitted), and the sensitive attribute is only "sex" for simplification of explanation. Fig. 17 illustrates an example of the Shapley value calculated for each data item of the non-sensitive attribute in a case where "sex" as the sensitive attribute S is predicted from the non-sensitive attribute X.

In the example illustrated in Fig. 17, the non-sensitive attribute X includes five data items of "credit amount", "people liable for", "employment = A72", "investment as income percentage", and "housing = A151". Then, since the Shapley value of "credit amount" is the highest, it can be read that contribution to sex is the largest. Therefore, the label modifying unit 304 inverts the value of the correct answer label Y (loan examination result) in a case where the sex is male in the input data [X,S] in which the value of "credit amount" is equal to or larger than a predetermined threshold (for example, an average value), or inverts the value of the correct answer label Y (loan examination result) in a case where the sex is female in such input data [X,S], obtains the corrected correct answer label Y°, and generates the dataset [Y°,X,S] in which bias caused by sex is mitigated.

The inventor has obtained an experimental result that a statistical parity difference is improved by applying the above method, that is, data bias between male and female can be mitigated. A feature of the method according to an embodiment of the present disclosure is that the explanatory variable contributing to bias mitigation can be indicated in a way that is intuitively understandable to humans.

C-4. Configuration of Information Processing Device

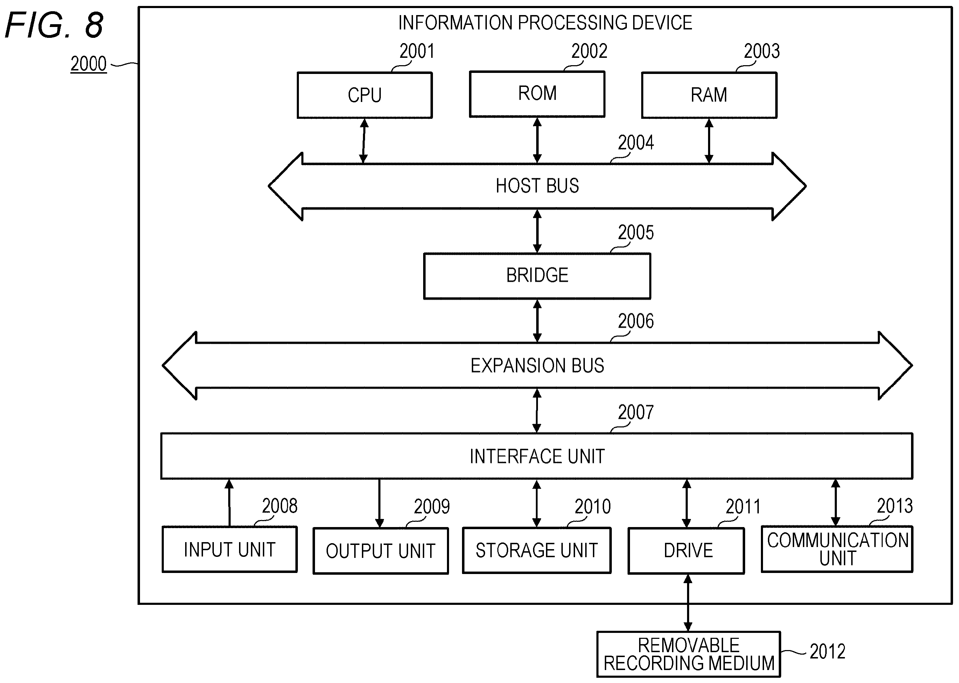

This section E describes an information processing device used to implement the training system 100 according to an embodiment of the present disclosure. Fig. 8 illustrates a configuration example of an information processing device 2000. The training system 100 may be implemented using one information processing device 2000, or the training system 100 may be implemented using two or more information processing devices 2000. For example, constituent elements of the training system 100 may be divided into two for the training phase and the inference phase, and the constituent elements for each phase may be implemented using one information processing device 2000.

The information processing device 2000 illustrated in Fig. 8 includes a CPU 2001, a read only memory (ROM) 2002, a random access memory (RAM) 2003, a host bus 2004, a bridge 2005, an expansion bus 2006, an interface unit 2007, an input unit 2008, an output unit 2009, a storage unit 2010, a drive 2011, and a communication unit 2013.

The CPU 2001 functions as an arithmetic processing device and a control device, and controls overall operation of the information processing device 2000 according to various programs. In consideration of a calculation load in a case where the information processing device 2000 operates in the training phase of the training system 100, it is desirable that the CPU 2001 is a multi-core CPU and that the information processing device 2000 further includes a multi-core processor such as a GPU or a GPGPU in addition to the CPU 2001. Then, these are collectively referred to below simply as the CPU 2001, for convenience.

The ROM 2002 stores programs (such as a basic input/output system) and computation parameters to be used by the CPU 2001 in a nonvolatile manner. The RAM 2003 is used to load a program to be used in execution of the CPU 2001 and temporarily store parameters such as work data that appropriately changes during execution of a program. Examples of the program loaded into the RAM 2003 and executed by the CPU 2001 include various application programs, an operating system (OS), and the like.

The CPU 2001, the ROM 2002, and the RAM 2003 are interconnected by the host bus 2004 including a CPU bus or the like. Then, the CPU 2001 operates in conjunction with the ROM 2002 and the RAM 2003 to execute various application programs under an execution environment provided by the OS, thereby enabling various functions and services to be implemented. In a case where the information processing device 2000 is a personal computer, the OS is, for example, Windows of Microsoft Corporation or Unix. In a case where the information processing device 2000 is an information terminal such as a smartphone or a tablet, the OS is, for example, iOS of Apple Inc. or Android of Google Inc. In addition, the application program includes an application for operating as a functional module such as the data bias mitigation unit 121, the model training unit 102, the inference unit 111, the input data processing unit 113, the model bias determination unit 123, or the model bias mitigation unit 124.

The host bus 2004 is connected to the expansion bus 2006 via the bridge 2005. The expansion bus 2006 is, for example, a peripheral component interconnect (PCI) bus or PCI Express, and the bridge 2005 is based on the PCI standard. Then, the information processing device 2000 does not necessarily have a configuration in which circuit components are separated by the host bus 2004, the bridge 2005, and the expansion bus 2006, and thus may be configured in such a way that almost all circuit components are implemented by being interconnected using a single bus (not illustrated).

The interface unit 2007 connects peripheral devices such as the input unit 2008, the output unit 2009, the storage unit 2010, the drive 2011, and the communication unit 2013 according to the standard of the expansion bus 2006. However, all of the peripheral devices illustrated in Fig. 8 are not necessarily essential, and the information processing device 2000 may further include another peripheral device (not illustrated). Furthermore, the peripheral device may be built in the main body of the information processing device 2000, or some peripheral devices may be externally connected to the main body of the information processing device 2000.

The input unit 2008 includes an input control circuit that generates an input signal on the basis of an input from a user and outputs the input signal to the CPU 2001, and the like. In a case where the information processing device 2000 is a personal computer, the input unit 2008 may include a keyboard, a mouse, and a touch panel, and may further include a camera and a microphone. Further, in a case where the information processing device 2000 is an information terminal such as a smartphone or a tablet, the input unit 2008 is, for example, a touch panel, a camera, or a microphone, and may further include another mechanical operator such as a button.

The output unit 2009 includes a sound output device such as a speaker and a headphone. Further, the output unit 2009 also includes, for example, a display device such as a liquid crystal display (LCD) device, an organic electro-luminescence (EL) display device, and a light emitting diode (LED).

The storage unit 2010 stores files such as programs (application, OS, etc.) to be executed by the CPU 2001 and various data. The data stored in the storage unit 2010 may include a corpus of normal speeches and whispers (described above) for training a neural network. Although the storage unit 2010 includes, for example, a mass storage device such as a solid state drive (SSD) or a hard disk drive (HDD), it may include an external storage device.

A removable recording medium 2012 is a cartridge-type storage medium such as a micro-SD card. The drive 2011 performs read and write operations on a removable recording medium 113 loaded therein. The drive 2011 outputs data read from the removable recording medium 2012 to the RAM 2003 and the storage unit 2010, and writes data on the RAM 2003 and the storage unit 2010 to the removable recording medium 2012.

The communication unit 2013 is a device that performs wireless communication such as Wi-Fi (registered trademark), Bluetooth (registered trademark), or a cellular communication network such as 4G or 5G. Furthermore, the communication unit 2013 may include a terminal such as a universal serial bus (USB) or a high-definition multimedia interface (HDMI (registered trademark)), and may further include a function of performing communication with a USB device such as a scanner or a printer, a display, or the like.

D. Second Embodiment

In this section D, as the second embodiment of the present disclosure, a technology of visualizing model bias by calculating an influence function (see Non-Patent Document 3) of each data item of a sensitive attribute for a result of inference by a trained model will be described. In the second embodiment, it is possible to further implement a technology of mitigating the model bias on the basis of the calculated influence function. That is, it is possible to mitigate the model bias caused by the sensitive attribute by adding input data of the sensitive attribute determined to have a low influence score and retraining the model. Furthermore, by applying XAI, it is possible to describe how to implement data bias mitigation in a way that is understandable to humans.

For example, in a case of being mounted on an image sensor with an AI function and performing person detection from an image captured by the image sensor by AI, an influence function of each data item of a sensitive attribute for the detection result is further calculated in the image sensor. Then, it is found that negative bias is applied to a data item having a low influence score in person detection, that is, the fairness of the model is not ensured. Therefore, it is possible to mitigate AI model bias caused by the sensitive attribute by adding the image having the same sensitive attribute and retraining AI.

D-1. Configuration of Imaging Device

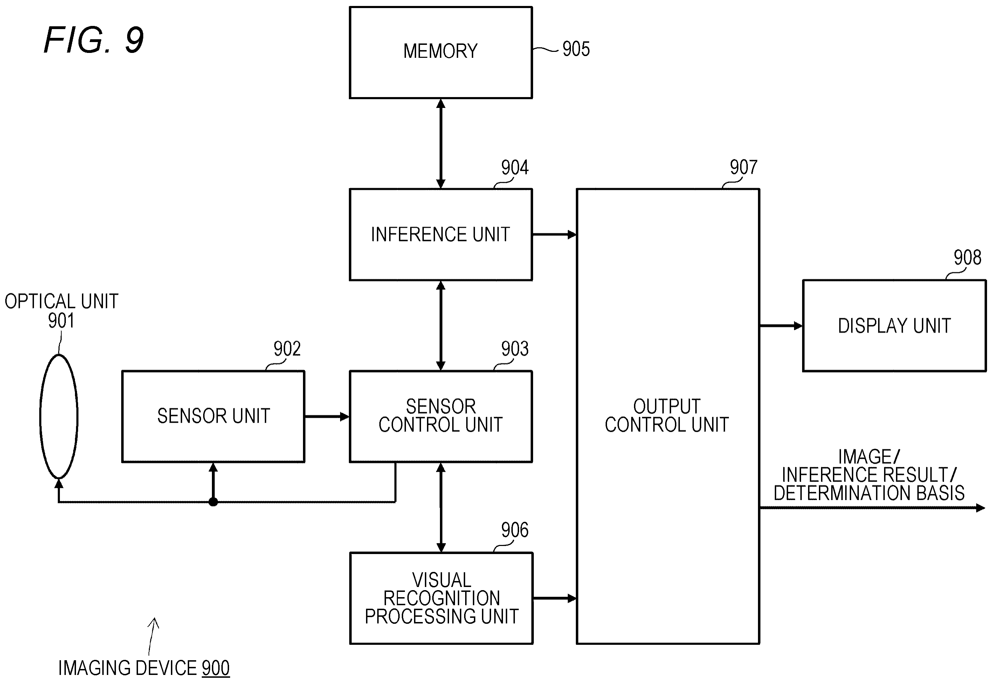

Fig. 9 schematically illustrates a functional configuration of an imaging device 900 to which the second embodiment of the present disclosure is applied. The illustrated imaging device 900 includes an optical unit 901, a sensor unit 902, a sensor control unit 903, an inference unit 904, a memory 905, a visual recognition processing unit 906, an output control unit 907, and a display unit 908. For example, a complementary metal oxide semiconductor (CMOS) image sensor can be formed by integrating the sensor unit 902, the sensor control unit 903, the inference unit 904, and the memory 905 by using a CMOS. However, the imaging device 900 may be an infrared light sensor that captures an image with infrared light or other type of light sensor.

The optical unit 901 includes, for example, a plurality of optical lenses to condense light from a subject on a light receiving surface of the sensor unit 902, a diaphragm mechanism to adjust a size of an opening with respect to incident light, and a focus mechanism to adjust a focus of irradiation light on the light receiving surface. The optical unit 901 may further include a shutter mechanism that adjusts a time during which the light receiving surface is irradiated with light. The diaphragm mechanism, the focus mechanism, and the shutter mechanism included in the optical unit 901 are configured to be controlled by, for example, the sensor control unit 903. Note that the optical unit 901 may be configured integrally with the imaging device 900, or may be configured to be attachable to and detachable from and replaceable with the main body of the imaging device 900 separately from the imaging device 900.

The sensor control unit 903 includes a microprocessor, for example, controls reading of pixel data from the sensor unit 902, and outputs image data based on each pixel signal read from each pixel. The pixel data output from the sensor control unit 903 is passed to the inference unit 904 and the visual recognition processing unit 906. Furthermore, the sensor control unit 903 generates an imaging control signal for controlling imaging in the sensor unit 902, and supplies the imaging control signal to the sensor unit 902. The imaging control signal includes information indicating exposure and analog gain at the time of imaging in the sensor unit 902. The imaging control signal further includes a control signal for performing an imaging operation of the sensor unit 902, such as a vertical synchronization signal or a horizontal synchronization signal.

The inference unit 904 corresponds to the "inference unit 111" illustrated in Fig. 1. A model parameter supplied from a model parameter holding unit 103 are stored in the memory 905, and the inference unit 904 uses a trained model in which the model parameter read from the memory 905 is set to perform inference using image data after visual recognition processing executed by the visual recognition processing unit 906. However, the inference unit 904 may perform inference on the pixel data passed from the sensor control unit 903. The recognition result of the inference unit 904 is passed to the output control unit 907.

The inference performed by the inference unit 904 includes recognition processing (person detection, face identification, image classification, or the like) of an object included in an image based on the pixel data. Furthermore, the inference unit 904 may further include various predictions such as determination of personnel employment or rejection, determination of a re-offending rate, and load examination.

Furthermore, in the present embodiment, the inference unit 904 further incorporates XAI and executes processing corresponding to the "model bias determination unit 123" in Fig. 1, that is, processing of analyzing a result of inference by the trained model and determining model bias. Specifically, the inference unit 904 calculates the influence function of the sensitive attribute for a result of person detection by the trained model by using XAI. For example, the inference unit 904 calculates the influence function of person detection for each attribute value of "male" and "female" for a data item "sex" of the sensitive attribute, and calculates the influence function of person detection for each attribute value of "white race", "black race", or the like for the data item "race" of the sensitive attribute. Then, the inference unit 904 adds an influence function calculation result to a person detection result and passes the result to the output control unit 907.

The visual recognition processing unit 906 executes processing for obtaining an image suitable for visual recognition by humans on the pixel data passed from the sensor control unit 903, and outputs image data including a group of pixel data, for example. For example, in a case where a color filter is provided for each pixel included in the sensor unit 902, and each piece of pixel data has color information of any of red (R), green (G), or blue (B), the visual recognition processing unit 906 executes demosaic processing, white balance processing, and the like. Furthermore, the visual recognition processing unit 906 can instruct the sensor control unit 903 to read pixel data necessary for the visual recognition processing from the sensor unit 902. The visual recognition processing unit 906 passes the image data in which the pixel data has been processed, to the output control unit 907. For example, by an image signal processor executing a program stored in advance in a local memory (not illustrated), the above-described function of the visual recognition processing unit 906 is implemented.

The output control unit 907 includes, for example, a microprocessor. The output control unit 907 receives image data as a result of the visual recognition processing from the visual recognition processing unit 906, and executes processing for displaying the image data on the display unit 908 or outputting the image data to the outside of the imaging device 900. The user can visually recognize a captured image on a screen of the display unit 908. The display unit 908 may be built in the imaging device 900 like a finder on a back surface of a main body of a digital camera, or may be externally connected to the imaging device 900 via an HDMI (registered trademark) interface or the like.

In the present embodiment, the output control unit 907 outputs an inference result (person detection result) of the inference unit 904 and a determination basis for inference (influence function of the sensitive attribute) together with the image data. The display unit 908 may present the inference result and the determination basis together with the captured image. Furthermore, the output control unit 907 may upload the determination basis for inference (the influence function of the sensitive attribute) to a model training server (not illustrated in Fig. 9) that actually executes model training processing.

D-2. Configuration of Image Sensor

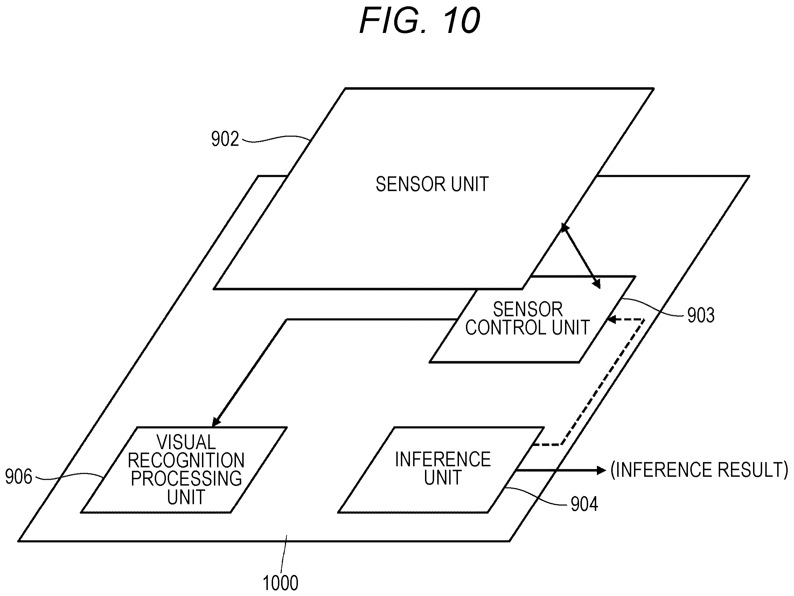

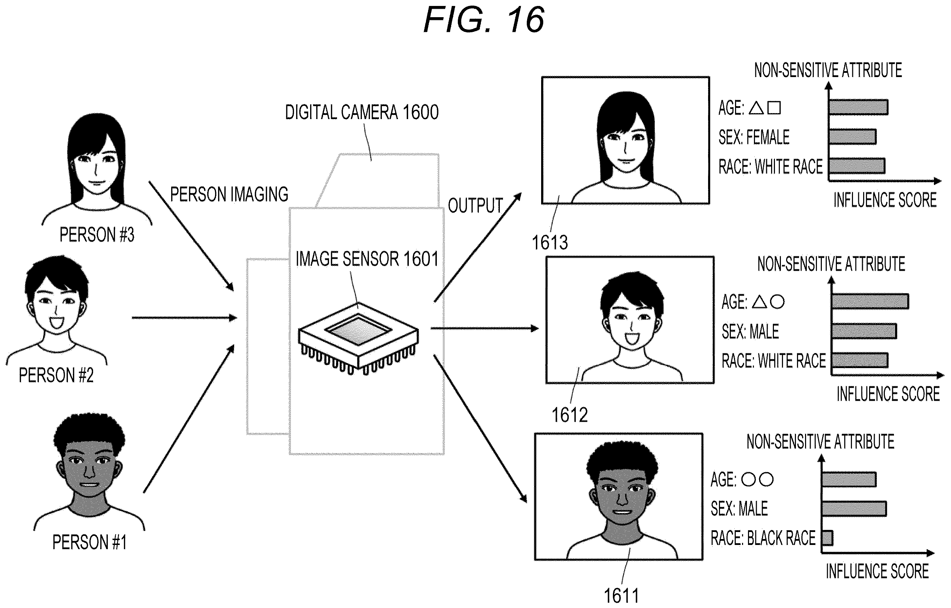

Fig. 10 illustrates a hardware implementation example of an image sensor 1000 in which the sensor unit 902, the sensor control unit 903, the inference unit 904, and the memory 905 are integrated. In the example illustrated in Fig. 10, the sensor unit 902, the sensor control unit 903, the inference unit 904, the memory 905, the visual recognition processing unit 906, and the output control unit 907 are mounted on one chip 1000. However, in Fig. 10, illustration of the memory 905 and the output control unit 907 is omitted in order to prevent confusion of the drawing. In the configuration example illustrated in Fig. 16, an inference result of the inference unit 904 and a determination basis thereof (the influence function of the sensitive attribute) are output to the outside of the chip 1000 via the output control unit 907. Furthermore, the inference unit 904 can acquire pixel data or image data to be used for recognition, from the sensor control unit 903 via an interface inside the chip 1000.

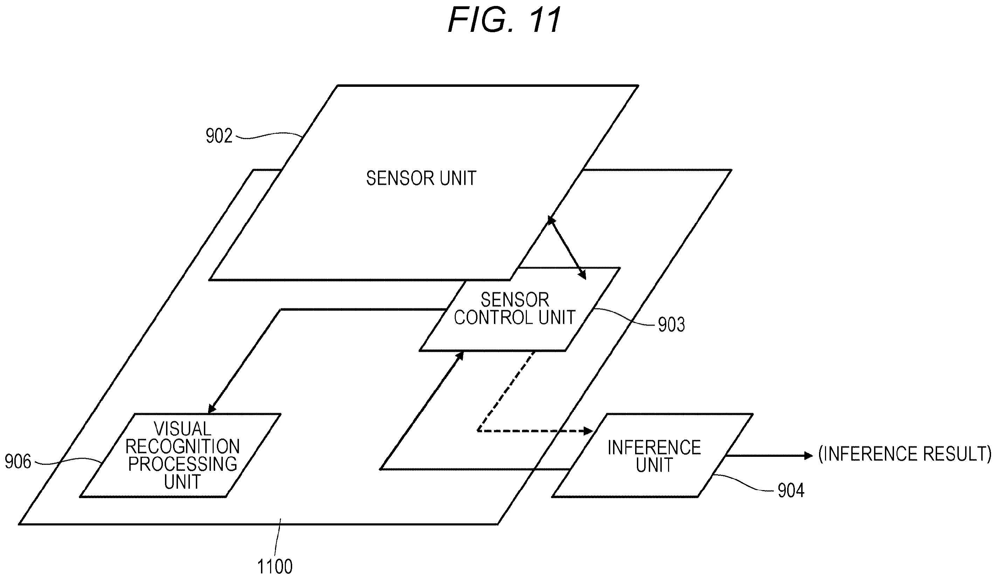

Fig. 11 illustrates a hardware implementation example of another image sensor 1100 in which the sensor unit 902, the sensor control unit 903, the inference unit 904, and the memory 905 are integrated. In the example illustrated in Fig. 11, the sensor unit 902, the sensor control unit 903, the visual recognition processing unit 906, and the output control unit 907 are mounted on one chip 1100, and the inference unit 904 and the memory 905 are arranged outside the chip 1100. However, also in Fig. 11, illustration of the memory 1505 and the output control unit 907 is omitted in order to prevent confusion of the drawing. In the configuration example illustrated in Fig. 11, the inference unit 904 acquires pixel data or image data to be used for recognition, from the output control unit 907 via a communication interface between chips. Furthermore, the inference unit 904 directly outputs the inference result and the determination basis thereof (the influence function of the sensitive attribute) to the outside. It is a matter of course that a configuration can be adopted in which the inference result of the inference unit 904 and the determination basis thereof are returned to the output control unit 907 in the chip 1100 via a communication interface between chips, and are output from the output control unit 907 to outside the chip 1100.

In the configuration example illustrated in Fig. 10, since both the inference unit 904 and the sensor control unit 903 are mounted on the same chip 1000, communication between the inference unit 904 and the sensor control unit 903 can be performed at a high speed via the interface in the chip 1000. Whereas, in the configuration example illustrated in Fig. 11, since the inference unit 904 is arranged outside the chip 1100, replacement of the inference unit 904 is easy, and a trained model can be exchanged by replacement. However, it is necessary to perform communication between the inference unit 904 and the sensor control unit 903 via an interface between chips, which lowers the speed.

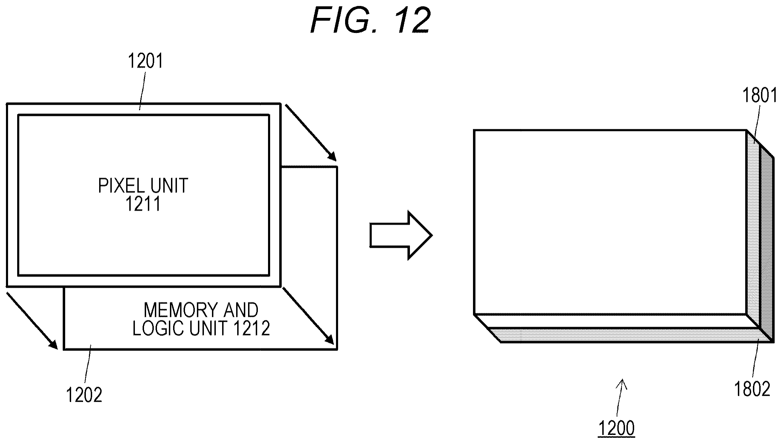

Fig. 12 illustrates an example in which the image sensor 1000 (or 1100) is formed as a semiconductor chip 1200 having a two-layer structure in which two layers are stacked. An example in which the stacked type image sensor 1200 having a two-layer structure in which semiconductor chips are stacked in two layers is formed is illustrated. In the structure illustrated in Fig. 12, a pixel unit 1211 is formed in a semiconductor chip 1201 of a first layer, and a memory and logic unit 1212 is formed in a semiconductor chip 1202 of a second layer. As illustrated on the right side of Fig. 12, a single solid-state imaging element is configured by bonding the semiconductor chip 1201 of the first layer and the semiconductor chip 1202 of the second layer in such a way that the semiconductor chip 1201 of the first layer and the semiconductor chip 1202 of the second layer are in electrical contact with each other.

The pixel unit 1211 includes at least a pixel array in the sensor unit 902. Furthermore, the memory and logic unit 1212 includes, for example, the sensor control unit 903, the inference unit 904, the memory 905, the visual recognition processing unit 906, the output control unit 907, and an interface that performs communication with the outside. The memory and logic unit 1212 further includes a part or all of a drive circuit that drives the pixel array in the sensor unit 902. Furthermore, although not illustrated in Fig. 12, the memory and logic unit 1212 may further include, for example, a memory used by the visual recognition processing unit 906 for processing image data.

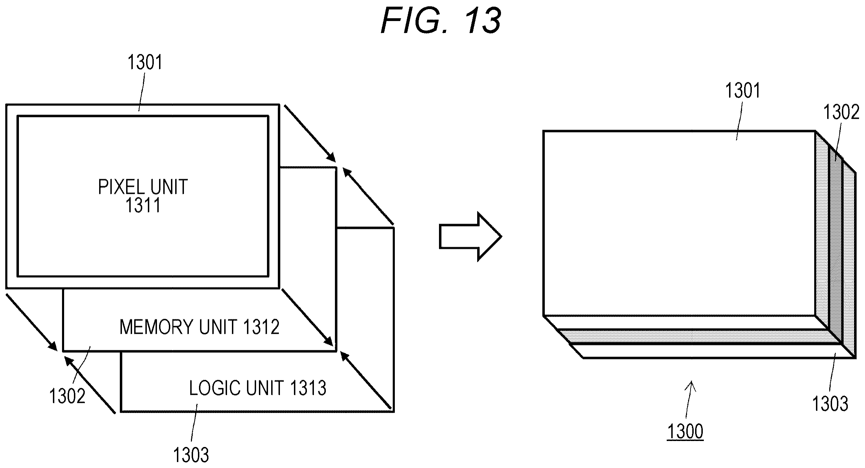

Fig. 13 illustrates an example in which the image sensor 1000 (or 1100) is formed as a semiconductor chip 1300 having a three-layer structure in which three layers are stacked. In the structure illustrated in Fig. 13, a pixel unit 1311 is formed in a semiconductor chip 1301 of a first layer, a memory unit 1312 is formed in a semiconductor chip 1302 of a second layer, and a logic unit 1313 is formed in a semiconductor chip 1303 of a third layer. As illustrated on the right side of Fig. 13, a single solid-state imaging element is configured by bonding the semiconductor chip 1301 of the first layer, the semiconductor chip 1302 of the second layer, and the semiconductor chip 1303 of the third layer in such a way that the semiconductor chip 1301 of the first layer, the semiconductor chip 1302 of the second layer, and the third semiconductor chip 1303 are in electrical contact with each other.

The pixel unit 1311 includes at least a pixel array in the sensor unit 1502. Furthermore, the logic unit 1313 includes, for example, the sensor control unit 903, the inference unit 904, the visual recognition processing unit 906, the output control unit 907, and an interface that performs communication with the outside. The logic unit 1313 further includes a part or all of a drive circuit that drives the pixel array in the sensor unit 902. Furthermore, in addition to the memory 905, the memory unit 1312 may further include, for example, a memory used by the visual recognition processing unit 906 for processing image data.

A person detection result of the inference unit 904 in the logic unit 1212 (or 1312) and the influence function of the sensitive attribute are simultaneously output from the semiconductor chip 1200 (or 1300) together with an image captured by the pixel unit 1211 (or 1311).

Fig. 16 illustrates an example of an operation in a digital camera 1600 on which an image sensor 1601 including the multilayer semiconductor chip 1200 (or 1300) including the logic unit is mounted.

In a case where various persons #1 to #3 having different races, sexes, ages, and the like are imaged by the digital camera 1600, the image sensor 1601 simultaneously outputs a captured image of each person, a person detection result for the captured image, and an influence function of each data item of the sensitive attribute at the time of person detection.

For example, in a case where a person is detected from a first captured image 1611, the image sensor 1601 calculates an influence function of each data item "race: black race", "sex: male", or "age: ∞" of the sensitive attribute and outputs the influence function simultaneously with the captured image. Similarly, in a case where a person is detected from a second captured image 1612, the image sensor 1601 calculates an influence function of each data item "race: white race", "sex: male", or "age: △∘" of the sensitive attribute, and in a case where a person is detected from a third captured image 1613, the image sensor 1601 calculates an influence function of each data item "race: white race", "sex: female", or "age :△□" of the sensitive attribute and outputs the influence function simultaneously with the captured image.

For example, in a case where the influence score is significantly low (alternatively, in a case where the influence score is less than a predetermined threshold) for the data item "race: black race" of the sensitive attribute, it can be determined that a trained model for person detection is negatively biased with respect to "black race". In such a case, model bias can be eliminated by adding a black person image and performing model retraining to improve the influence score for "black race".

D-3. System Configuration and Operation

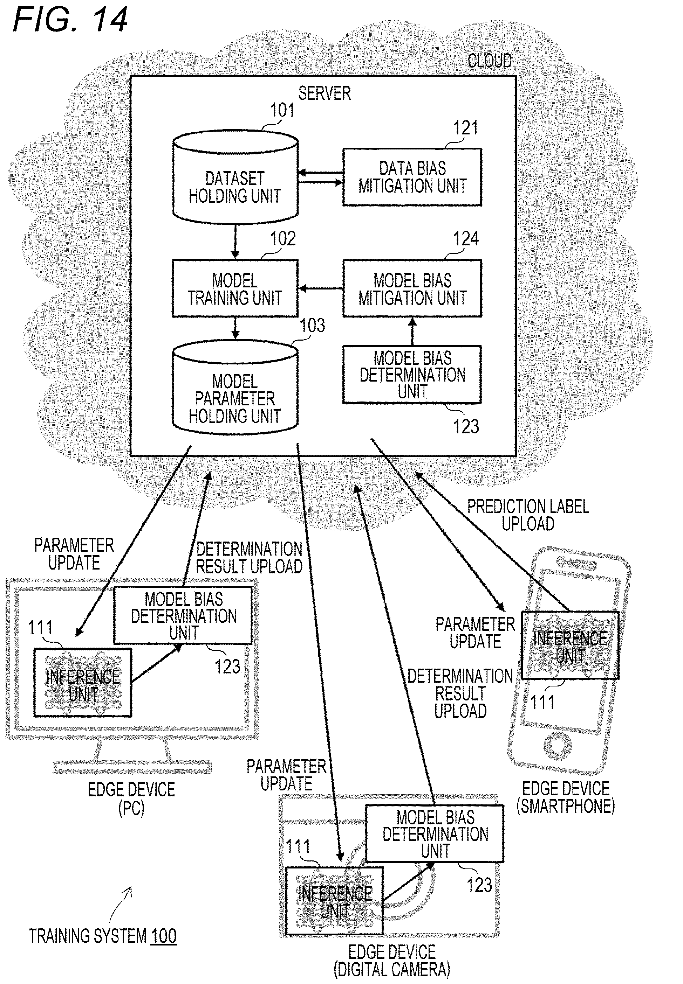

Fig. 14 illustrates an operation example of the training system 100 in a case where the second embodiment of the present disclosure is applied. In the illustrated example, the training system 100 is configured as a client server system including a server on a cloud and an infinite number of edge devices (clients) that receive a service from the server.

In the server, functional modules related to model training processing, including a data bias mitigation unit 121 that mitigates bias latent in a dataset and a model training unit 102 that trains a model by using the dataset in which the bias is mitigated are arranged. Then, on the server side, a model parameter obtained as a result of the model training processing executed by the model training unit 102 is held in the model parameter holding unit 103. On the other hand, there are a large number of edge devices on the cloud side. The edge device is a digital camera, a multifunctional information terminal such as a smartphone or a tablet, a personal computer, or the like. Each edge device includes the inference unit 111, and there is also an edge device including the model bias determination unit 123.

The server provides, to each edge device, the model parameter obtained by model training using the dataset in which bias is mitigated. The form in which the model parameter is provided is variable. For example, the model parameter may be installed in advance at the time of shipping the edge device product. In addition, even after product shipment, the edge device may download the model parameter from the server at an appropriate timing. In addition, even after the start of use, the model parameter updated on the server side may be appropriately downloaded to the edge device as necessary. The update of the model parameter on the server side includes an update accompanying model bias mitigation, and it is a matter of course that the update of the model parameter on the server side may also include an update for other purposes.

In each edge device, the model parameter provided from the server is set in the inference unit 111, and prediction processing by the trained model is executed. A task performed by the trained model is, for example, person detection from a captured image of a camera. However, the task may be face detection or face identification, and may further include determination of a possibility of employment of an employee, a possibility of loan examination, re-offending, and the like based on a face image.

The edge device including the model bias determination unit 123 analyzes the result of inference performed by the inference unit 111 using the trained model, and determines whether or not fairness of the model is ensured, that is, model bias. Specifically, the model bias determination unit 123 calculates the influence function of the sensitive attribute for a result of inference by the trained model using XAI. That is, the model bias determination unit 123 calculates the influence function of each data item of the sensitive attribute for the result of inference by the trained model by using XAI, and detects whether or not there is a data item having a low influence score for the inference result. Then, the model bias determination unit 123 determines that negative bias is applied to the data item of the sensitive attribute having a low influence score, that is, fairness of the model is not ensured, and uploads the determination result (alternatively, the influence score of each data item of the sensitive attribute) to the server (alternatively, the server may be notified only in a case where it is determined that there is model bias).

A model bias mitigation unit 124 on the server side executes processing for mitigating the model bias on the basis of the model bias determination result. The model bias mitigation unit 124 may perform a model bias mitigation algorithm such as transfer learning, fine tuning, and incremental learning, and the model training unit 102 may mitigate the model bias for the trained model. Specifically, the model bias mitigation unit 124 augments the dataset corresponding to the sensitive attribute for which the model bias determination unit 123 has determined that the influence score for inference by the trained model is low, and instructs the model training unit 102 to retrain the model by using the augmented dataset. In a case of image data, the model bias mitigation unit 124 may generate an image for augmentation by using, for example, computer graphics (CG), or may generate an image by using a generative adversarial network (GAN). As a result of performing retraining by using the augmented dataset, the model is updated in such a way that even the influence of the data item of the sensitive attribute having a low influence score increases, and model bias caused by the sensitive attribute is mitigated. Then, the model parameter whose model bias has been mitigated by retraining is accumulated in the model parameter holding unit 103 and further provided to each edge device.

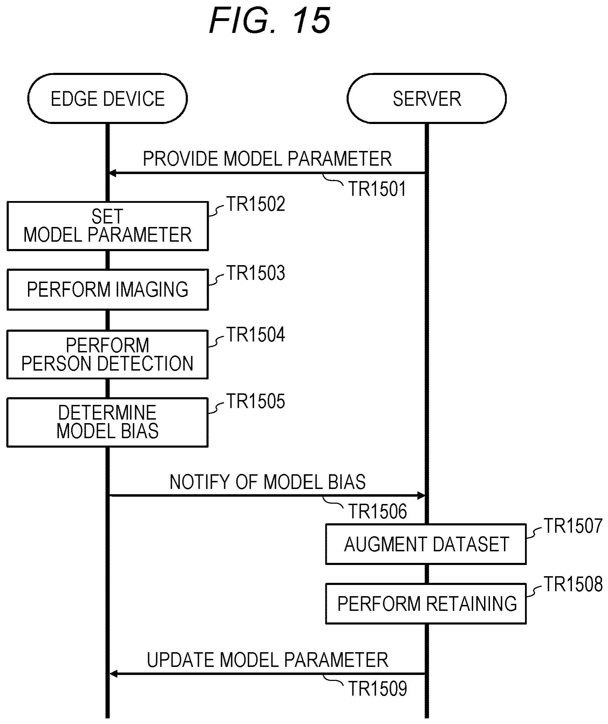

Next, a system operation will be described. Fig. 15 schematically illustrates an example of a communication sequence performed between the edge device and the server in the client server system illustrated in Fig. 14. In Fig. 15, for simplification of the drawing, the edge device and the server are illustrated in a one-to-one relationship, but in practice, one server implements a similar communication sequence with a large number of edge devices.

However, in the following description, a digital camera (alternatively, an information terminal having a digital camera function) is assumed as the edge device, and an image sensor chip (see Figs. 10, 12, and 13) having the function of each of the inference unit 111 and the model bias determination unit 123 is mounted on the digital camera. In addition, it is assumed that a model parameter of a model trained to detect a person from a captured image is provided from the server to the edge device.

First, the server provides the model parameter obtained by learning to the edge device (TR1501). Alternatively, the edge device acquires the model parameter from the server. On the other hand, on the edge device side, the model parameter provided from the server is set in the model to be used by the inference unit 111 (TR1502), and person detection using the trained model becomes possible.

Thereafter, in a case where an imaging operation is performed as a normal digital camera in the edge device (TR1503), the inference unit 111 in the image sensor executes person detection processing by using the trained model (TR1504), and the model bias determination unit 123 performs model bias determination for the person detection result by using XAI (TR1505). As the model bias determination, the model bias determination unit 123 calculates the influence function of each data item of the sensitive attribute for the result of person detection by the trained model by using XAI, and detects whether or not there is a data item having a low influence score for the person detection result.

Then, the edge device notifies the server of (uploads) the model bias determination result (TR1506). At this time, the edge device may notify the server of only information of a data item having a low influence degree score, that is, a negatively biased data item. Alternatively, the edge device may notify the server of all the influence functions calculated for each data item of the sensitive attribute, and a negatively biased data item may be determined on the server side.

In a case where the notification of the model bias determination result is received from the edge device, model bias mitigation for the trained model is performed on the server side. First, the server augments a dataset corresponding to the data item of the sensitive attribute having a low influence score in person detection (TR1507). In a case of image data, for example, an image for augmentation may be generated using CG, or an image may be generated using GAN. The server then performs model retraining by using the augmented dataset (TR1508), thereby mitigating the model bias due to the sensitive attribute.

Then, the server provides the model parameter after mitigating the model bias to the edge device (TR1509). For example, a new model parameter may be distributed from the server to the edge device in the form of product software update.

It is difficult to verify and modify the model after releasing the product. On the other hand, according to the communication sequence as illustrated in Fig. 15, in an actual operation process after the release, bias of the trained model used in each product (that is, the edge device) can be verified using XAI, and further, retraining can further be performed on the server side on the basis of information of the detected model bias, and the model parameter after mitigating the model bias can be updated for each product. Therefore, in a case where the problem of the fairness of the trained model becomes apparent in the actual operation, the model bias can be mitigated.

For example, as in a case described with reference to Fig. 16 in the above-described section D-2, in a case where it is observed on the edge device side that the influence score is low for the data item "race: black race" of the sensitive attribute in the trained model for person detection, it can be determined that negative bias is applied to "black race" in the trained model for person detection. The edge device notifies the server of such a determination result. Then, on the server side, in response to the notification from the edge device, the model bias can be eliminated by adding a black person image and performing model retraining, and the model parameter with an increased influence score for "black race" can be provided to the edge device.

INDUSTRIAL APPLICABILITY

The present disclosure has been described in detail with reference to the specific embodiment. However, the present disclosure should not be construed as being limited to the above-described embodiments, and those skilled in the art obviously can make modifications and substitutions of the embodiments without departing from the gist of the present disclosure. Additionally, the effects described herein are each merely an example, so that the effects brought by an embodiment of the present disclosure are not limited and may include an additional effect that is not described herein.

The present disclosure can be applied to training of a model that executes processing such as face detection, face identification, person/object detection, and posture estimation, as well as various types of detection, determination, estimation, and recognition by receiving an image or sound. According to the present disclosure, data bias latent in a dataset for model training can be calculated using XAI, and the data bias can be mitigated on the basis of the calculation result. Furthermore, according to the present disclosure, the model bias can be mitigated by calculating model bias using XAI, augmenting a negatively biased dataset, and retraining the model.

In short, the present disclosure has been described in an illustrative manner, and the contents described herein should not be interpreted in a limited manner. In order to determine the gist of the present disclosure, the claims should be taken into consideration.

The series of processing described in the present specification can be executed by hardware, software, or a configuration in which hardware and software are combined. In a case where the processing is executed by software, a program recorded with a processing sequence related to implementation of the present disclosure is installed and executed in a memory incorporated in dedicated hardware in a computer. It is also possible to install a program in a general-purpose computer capable of executing various types of processing and cause the computer to execute the processing related to implementation of the present disclosure.

The program can be preliminarily stored in a recording medium provided in the computer, such as an HDD, an SSD, or a ROM. Alternatively, the program can be temporarily or permanently stored in a removable recording medium such as a flexible disk, a compact disc read only memory (CD-ROM), a magneto optical (MO) disk, a digital versatile disc (DVD), a Blu-ray Disc (BD) (registered trademark), a magnetic disk, or a universal serial bus (USB) memory. Using such a removable recording medium enables providing a program related to implementation of the present disclosure as so-called package software.

Additionally, the program may be transferred from a download site to a computer in a wireless or wired manner via a network such as a wide area network (WAN) typified by a cellular network, a local area network (LAN), or the Internet. The computer can receive the program thus transferred and cause the program to be installed in a mass storage device such as an HDD or an SSD in the computer.

Note that the present disclosure may also have the following configurations.

(1) An information processing device including:

an acquisition unit that acquires information regarding bias caused by a sensitive attribute included in data or a model by using explainable artificial intelligence (XAI); and
a processing unit that executes processing of mitigating the bias of the data or the model on the basis of the acquired information.

(2) The information processing device according to (1), in which

the acquisition unit includes a pre-processing unit that removes a data item related to the sensitive attribute from input data including a plurality of data items, a prediction unit that predicts the sensitive attribute from a data item of a non-sensitive attribute in the input data, and a contribution degree calculation unit that calculates a degree of contribution of each data item of the non-sensitive attribute in the input data to a prediction result of the prediction unit, and
the processing unit includes a dataset generation unit that modifies a correct answer label corresponding to the input data according to a contribution degree calculation result and generates a dataset in which the bias caused by the sensitive attribute is mitigated.

(3) The information processing device according to (2), in which
the processing unit modifies the correct answer label for each sensitive attribute value of the input data including the data item having a higher degree of contribution in the non-sensitive attribute, and generates the dataset in which the bias caused by the sensitive attribute is mitigated.

(4) The information processing device according to (2), in which
the processing unit modifies the correct answer label for each sensitive attribute value of the input data including the data item having a higher degree of contribution that is equal to or higher than a predetermined threshold in the non-sensitive attribute, and generates the dataset in which the bias caused by the sensitive attribute is mitigated.

(5) The information processing device according to (2), in which

the sensitive attribute includes sex, and
the processing unit changes the correct answer label for any one of male and female in which a value of the data item having a higher degree of contribution is equal to or larger than a predetermined threshold in the non-sensitive attribute, and generates the dataset in which bias caused by sex is mitigated.

(6) The information processing device according to any one of (2) to (5), in which
the prediction unit predicts the sensitive attribute from the data item of the non-sensitive attribute in the input data by using a prediction model having the sensitive attribute as an objective variable.

(7) The information processing device according to (6), in which
the contribution degree calculation unit calculates the degree of contribution of each data item of the non-sensitive attribute on the basis of a determination basis of the prediction model obtained by using the XAI.

(8) The information processing device according to any one of (6) and (7), in which
the contribution degree calculation unit calculates the degree of contribution on the basis of a Shapley value of each data item of the non-sensitive attribute by using Shapley additive explanations (SHAP).

(9) The information processing device according to any one of (2) to (8), further including:

a training unit that trains the model by using the dataset which is generated by the dataset generation unit and in which the bias is mitigated; and
an inference unit that performs inference by using the model trained by the training unit.

(10) The information processing device according to any one of (1) to (9), in which
the acquisition unit further includes an influence function calculation unit that calculates an influence function of the sensitive attribute for a result of determining input data by a trained model.

(11) The information processing device according to (10), in which

the input data is an image captured by an image sensor,
the trained model is a model trained to detect a person from the image, and
the influence function calculation unit calculates the influence function of the sensitive attribute in a case where a person is detected from the image by the trained model.

(12) The information processing device according to any one of (10) and (11), in which
the processing unit further performs model retraining by adding an image of the sensitive attribute having a low influence function value.

(13) An information processing method including:

acquiring information regarding bias caused by a sensitive attribute included in data or a model by using explainable artificial intelligence (XAI); and
executing processing of mitigating the bias of the data or the model on the basis of the acquired information.

(14) A computer program described in a computer-readable format to cause a computer to functions as:

an acquisition unit that acquires information regarding bias caused by a sensitive attribute included in data or a model by using explainable artificial intelligence (XAI); and
a processing unit that executes processing of mitigating the bias of the data or the model on the basis of the acquired information.

(15) An image sensor including:

a multilayer semiconductor chip,
in which a sensor unit that includes a pixel array and captures an image is mounted on a first layer, and a memory unit that stores the captured image of the sensor unit and a logic unit that controls driving of the sensor unit and processes the captured image of the sensor unit are mounted on a second layer and subsequent layers, and

the logic unit includes an inference unit that performs inference on the captured image by using a trained model and a determination basis calculation unit that calculates a determination basis for a result of the inference by the trained model.

(16) The image sensor according to (15), in which

the inference unit detects a person from the captured image by using the trained model, and
the determination basis calculation unit calculates an influence function of a sensitive attribute in a case where a person is detected from the image by the trained model.

REFERENCE SIGNS LIST

| | |
|---|---|
| 100 | Training system |
| 101 | Dataset holding unit |
| 102 | Model training unit |
| 103 | Model parameter holding unit |
| 111 | Inference unit |
| 112 | Data input unit |
| 113 | Input data processing unit |
| 121 | Data bias mitigation unit |
| 122 | Data supplement unit |
| 123 | Model bias determination unit |
| 124 | Model bias mitigation unit |
| 130 | Dataset collection unit |
| 301 | Pre-processing unit |
| 302 | Prediction unit |
| 303 | Contribution degree calculation unit |
| 304 | Label modifying unit |
| 900 | Imaging device |
| 901 | Optical unit |
| 902 | Sensor unit |
| 903 | Sensor control unit |
| 904 | Inference unit |
| 905 | Memory |
| 906 | Visual recognition processing unit |
| 907 | Output control unit |
| 908 | Display unit |
| 1600 | Digital camera |
| 1601 | Image sensor |
| 2000 | Information processing device |
| 2001 | CPU |
| 2002 | ROM |
| 2003 | RAM |
| 2004 | Host bus |
| 2005 | Bridge |
| 2006 | Expansion bus |
| 2007 | Interface unit |
| 2008 | Input unit |
| 2009 | Output unit |
| 2010 | Storage unit |
| 2011 | Drive |
| 2012 | Removable recording medium |
| 2013 | Communication unit |

**Claims**

1. An information processing device comprising:

   an acquisition unit that acquires information regarding bias caused by a sensitive attribute included in data or a model by using explainable artificial intelligence (XAI); and
   a processing unit that executes processing of mitigating the bias of the data or the model on a basis of the acquired information.

2. The information processing device according to claim 1, wherein

   the acquisition unit includes a pre-processing unit that removes a data item related to the sensitive attribute from input data including a plurality of data items, a prediction unit that predicts the sensitive attribute from a data item of a non-sensitive attribute in the input data, and a contribution degree calculation unit that calculates a degree of contribution of each data item of the non-sensitive attribute in the input data to a prediction result of the prediction unit, and
   the processing unit includes a dataset generation unit that modifies a correct answer label corresponding to the input data according to a contribution degree calculation result and generates a dataset in which the bias caused by the sensitive attribute is mitigated.

3. The information processing device according to claim 2, wherein
   the processing unit modifies the correct answer label for each sensitive attribute value of the input data including the data item having a higher degree of contribution in the non-sensitive attribute, and generates the dataset in which the bias caused by the sensitive attribute is mitigated.

4. The information processing device according to claim 2, wherein
   the processing unit modifies the correct answer label for each sensitive attribute value of the input data including the data item having a higher degree of contribution that is equal to or higher than a predetermined threshold in the non-sensitive attribute, and generates the dataset in which the bias caused by the sensitive attribute is mitigated.

5. The information processing device according to claim 2, wherein

   the sensitive attribute includes sex, and
   the processing unit changes the correct answer label for any one of male and female in which a value of the data item having a higher degree of contribution is equal to or higher than a predetermined threshold in the non-sensitive attribute, and generates the dataset in which bias caused by sex is mitigated.

6. The information processing device according to claim 2, wherein
   the prediction unit predicts the sensitive attribute from the data item of the non-sensitive attribute in the input data by using a prediction model having the sensitive attribute as an objective variable.

7. The information processing device according to claim 6, wherein
   the contribution degree calculation unit calculates the degree of contribution of each data item of the non-sensitive attribute on a basis of a determination basis of the prediction model obtained by using the XAI.

8. The information processing device according to claim 6, wherein
   the contribution degree calculation unit calculates the degree of contribution on a basis of a Shapley value of each data item of the non-sensitive attribute by using Shapley additive explanations (SHAP).

9. The information processing device according to claim 2, further comprising:

   a training unit that trains the model by using the dataset which is generated by the dataset generation unit and in which the bias is mitigated; and
   an inference unit that performs inference by using the model trained by the training unit.

10. The information processing device according to claim 1, wherein
    the acquisition unit further includes an influence function calculation unit that calculates an influence function of the sensitive attribute for a result of determining input data by a trained model.

**11.** The information processing device according to claim 10, wherein

the input data is an image captured by an image sensor,
the trained model is a model trained to detect a person from the image, and
the influence function calculation unit calculates the influence function of the sensitive attribute in a case where a person is detected from the image by the trained model.

**12.** The information processing device according to claim 10, wherein
the processing unit further performs model retraining by adding an image of the sensitive attribute having a low influence function value.

**13.** An information processing method comprising:

acquiring information regarding bias caused by a sensitive attribute included in data or a model by using explainable artificial intelligence (XAI); and
executing processing of mitigating the bias of the data or the model on a basis of the acquired information.

**14.** A computer program described in a computer-readable format to cause a computer to functions as:

an acquisition unit that acquires information regarding bias caused by a sensitive attribute included in data or a model by using explainable artificial intelligence (XAI); and
a processing unit that executes processing of mitigating the bias of the data or the model on a basis of the acquired information.

**15.** An image sensor comprising:

a multilayer semiconductor chip,
wherein a sensor unit that includes a pixel array and captures an image is mounted on a first layer, and a memory unit that stores the captured image of the sensor unit and a logic unit that controls driving of the sensor unit and processes the captured image of the sensor unit are mounted on a second layer and subsequent layers, and the logic unit includes an inference unit that performs inference on the captured image by using a trained model and a determination basis calculation unit that calculates a determination basis for a result of the inference by the trained model.

**16.** The image sensor according to claim 15, wherein

the inference unit detects a person from the captured image by using the trained model, and
the determination basis calculation unit calculates an influence function of a sensitive attribute in a case where a person is detected from the image by the trained model.

# FIG. 1

# FIG. 2

```
                    ┌─────────────┐
                    │   START     │
                    └─────────────┘
                           │
                           ▼
TRAINING PHASE    S201 ─┤ COLLECT DATASET │
(DATA BIAS MITIGATION)
                           │
                           ▼
                    ┌─────────────────────┐
                    │   FOR EACH DATASET  │
                    └─────────────────────┘
                           │
                           ▼
                  S202 ─┤ READ DATASET │
                           │
                           ▼
                  S203 ─┤ PREDICT SENSITIVE ATTRIBUTE
                         FROM NON-SENSITIVE ATTRIBUTE │
                           │
                           ▼
                  S204 ─┤ CALCULATE DETERMINATION
                         BASIS OF PREDICTION │
                           │
                           ▼
                  S205 ─┤ CORRECT
                         CORRESPONDING LABEL │
                           │
                           ▼
                  S206 ─┤ TRAIN MODEL │
```

```
                  S211 ─┤ PERFORM INFERENCE │
                           │
                           ▼
                  S212 ─┤ CALCULATE INFLUENCE
                         FUNCTION OF EACH DATA ITEM
                         OF NON-SENSITIVE ATTRIBUTE │
                           │
                           ▼
                  S213 ─┤ IS THERE ITEM HAVING
                         LOW INFLUENCE SCORE? │── NO
                           │ YES
                           ▼
                  S214 ─┤ ADD DATA FOR ITEM HAVING
                         LOW INFLUENCE SCORE │
                           │
                           ▼
                  S215 ─┤ RETRAIN MODEL │
                           │
                           ▼
                    ┌─────────────┐
                    │     END     │
                    └─────────────┘
```

INFERENCE PHASE
(MODEL BIAS MITIGATION)

# FIG. 3

DATASET HOLDING UNIT 101

**121 DATA BIAS MITIGATION UNIT**

DATASET [Y, X, S]

301 PRE-PROCESSING UNIT

NON-SENSITIVE ATTRIBUTE DATA X

302 PREDICTION UNIT

MODEL FOR PREDICTING SENSITIVE ATTRIBUTE

SENSITIVE ATTRIBUTE PREDICTED VALUE $\hat{S}$

303 CONTRIBUTION DEGREE CALCULATION UNIT (XAI)

SHAP

DATASET [Y, X, S]

304 LABEL CORRECTION UNIT

Shapley VALUE

DATASET (CORRECTED) [$Y^o$, X, S]

DATASET HOLDING UNIT 101

102 MODEL TRAINING UNIT

MODEL FOR PREDICTING OBJECTIVE VARIABLE Y

# FIG. 4

| SENSITIVE ATTRIBUTE | PREDICTION (EMPLOYMENT RESULT) |
|---|---|

MALE

EMPLOYED

REJECTED

FEMALE

EMPLOYED

REJECTED

# FIG. 5

| SENSITIVE ATTRIBUTE | PREDICTION (RE-OFFENDING RATE) |
|---|---|

WHITE RACE

ERRONEOUSLY SENSED          MISSED

| PREDICTION | NOT RE-COMMIT | RE-COMMIT | NOT RE-COMMIT | RE-COMMIT |
|---|---|---|---|---|

FALSE POSITIVE RATE (FPR)          TRUE POSITIVE RATE (TPR)

| NOT RE-COMMIT | RE-COMMIT |
|---|---|

BLACK RACE

ERRONEOUSLY SENSED          MISSED

| PREDICTION | NOT RE-COMMIT | RE-COMMIT | NOT RE-COMMIT | RE-COMMIT |
|---|---|---|---|---|

FALSE POSITIVE RATE (FPR)          TRUE POSITIVE RATE (TPR)

| NOT RE-COMMIT | RE-COMMIT |
|---|---|

# FIG. 6

| SENSITIVE ATTRIBUTE | PREDICTION (LOAN EXAMINATION RESULT) |
|---|---|

MALE

PREDICTION

| | DISCHARGE | NOT DISCHARGE |
|---|---|---|
| NOT CONSIDERING FAIRNESS | | TRUE POSITIVE RATE (TPR) |
| NOT DISCHARGE DEBT | | DISCHARGE DEBT |

FEMALE

PREDICTION

| | DISCHARGE | NOT DISCHARGE |
|---|---|---|
| NOT CONSIDERING FAIRNESS | | TRUE POSITIVE RATE (TPR) |
| NOT DISCHARGE DEBT | | DISCHARGE DEBT |

# FIG. 7

TRUE DISTRIBUTION
$$\Pr[Y, X, S]$$

$$\Pr[S|X]$$

COOPERATIVE GAME THEORY Shapely VALUE

FAIR SUBSPACE 701

TRUE FAIR DISTRIBUTION
$$\Pr[Y^o, X, S]$$

MODEL DISTRIBUTION SUBSPACE 702

ESTIMATED FAIR DISTRIBUTION
$$\Pr[\widehat{Y^o}, X, S]$$

FAIR MODEL SUBSPACE 703

EP 4 675 516 A1

FIG. 8

INFORMATION PROCESSING DEVICE

2000

| 2001 | 2002 | 2003 |
| CPU | ROM | RAM |

2004

HOST BUS

2005

BRIDGE

2006

EXPANSION BUS

2007

INTERFACE UNIT

| 2008 | 2009 | 2010 | 2011 | 2013 |
| INPUT UNIT | OUTPUT UNIT | STORAGE UNIT | DRIVE | COMMUNICATION UNIT |

REMOVABLE RECORDING MEDIUM — 2012

EP 4 675 516 A1

**FIG. 9**

MEMORY — 905

INFERENCE UNIT 904

OPTICAL UNIT 901

SENSOR UNIT 902

SENSOR CONTROL UNIT 903

VISUAL RECOGNITION PROCESSING UNIT 906

OUTPUT CONTROL UNIT 907

DISPLAY UNIT 908

IMAGE/ INFERENCE RESULT/ DETERMINATION BASIS

IMAGING DEVICE 900

# FIG. 10

SENSOR UNIT — 902

SENSOR CONTROL UNIT — 903

VISUAL RECOGNITION PROCESSING UNIT — 906

INFERENCE UNIT — 904

(INFERENCE RESULT)

1000

EP 4 675 516 A1

FIG. 11

EP 4 675 516 A1

# FIG. 12

1201

PIXEL UNIT
1211

MEMORY AND
LOGIC UNIT 1212

1202

1801

1802

1200

# FIG. 13

# FIG. 14

# FIG. 15

EDGE DEVICE       SERVER

PROVIDE MODEL PARAMETER

TR1501

SET
MODEL PARAMETER   TR1502

PERFORM IMAGING   TR1503

PERFORM
PERSON DETECTION   TR1504

DETERMINE
MODEL BIAS   TR1505

NOTIFY OF MODEL BIAS

TR1506

AUGMENT DATASET   TR1507

PERFORM RETAINING   TR1508

UPDATE MODEL PARAMETER

TR1509

FIG. 16

FIG. 17

credit amount

people liable for

employment=A72

investment as income percentage

housing=A151

0.00  0.01  0.02  0.03  0.04  0.05  0.06  0.07

Shapley VALUE (AVERAGE OF ABSOLUTE VALUES)

EP 4 675 516 A1

## INTERNATIONAL SEARCH REPORT

| International application No. |
|---|
| **PCT/JP2023/035284** |

**A. CLASSIFICATION OF SUBJECT MATTER**

*G06N 20/00*(2019.01)i
FI:    G06N20/00 130

According to International Patent Classification (IPC) or to both national classification and IPC

**B. FIELDS SEARCHED**

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/123907 A1 (SONY GROUP CORPORATION) 16 June 2022 (2022-06-16) paragraphs [0030]-[0038], [0082]-[0088], fig. 1 | 1, 13-15 |
| A | entire text, all drawings | 2-12, 16 |
| A | WO 2021/260945 A1 (FUJITSU LIMITED) 30 December 2021 (2021-12-30) entire text, all drawings | 1-16 |
| A | JP 2021-152838 A (HITACHI, LTD.) 30 September 2021 (2021-09-30) entire text, all drawings | 1-16 |
| A | JP 2022-525702 A (ZEST FINANCE, INC.) 18 May 2022 (2022-05-18) entire text, all drawings | 1-16 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 December 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/035284**

| Patent document cited in search report | | | Publication date (day/month/year) | Patent family member(s) | | | Publication date (day/month/year) |
|---|---|---|---|---|---|---|---|
| WO | 2022/123907 | A1 | 16 June 2022 | (Family: none) | | | |
| WO | 2021/260945 | A1 | 30 December 2021 | US<br>entire text, all drawings<br>EP<br>entire text, all drawings | 2023/0117689<br><br>4174734<br> | A1<br><br>A1<br> | |
| JP | 2021-152838 | A | 30 September 2021 | US<br>entire text, all drawings | 2022/0351094<br> | A1<br> | |
| JP | 2022-525702 | A | 18 May 2022 | US<br>entire text, all drawings<br>EP<br>entire text, all drawings | 2020/0302524<br><br>3942384<br> | A1<br><br>A1<br> | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021012593 A

**Non-patent literature cited in the description**

- **XU et al.** FairGAN: Fairness-aware Generative Adversarial Networks. *IEEE BigData*, 2018
- **LUNDBERG, SCOTT M.** ; **SU-IN LEE.** A unified approach to interpreting model predictions. *Advances in neural information processing systems*, 12017
- Why Should I Trust You?. *Explaining the Predictions of Any Classifier,* https://arxiv.org/abs/1602.04938
- **COOK, R.D.** ; **WEISBERG, S**. *Residuals and Influence in Regression*, https://conservancy.umn.edu/handle/11299/37076